# EUROPEAN PATENT APPLICATION

(11) **EP 4 811 837 A1**
(43) Date of publication of application: **23.09.2026**
(21) Application number: 24891366.7
(22) Date of filing: 11.11.2024
(51) Int. Cl.: H04W 8/24, H04W 72/0457

(54) **TERMINAL, WIRELESS COMMUNICATION METHOD, AND BASE STATION**

(30) Priority: 13.11.2023 JP 2023192789
(71) Applicant: NTT DOCOMO, INC., Tokyo 100-6150 (JP)
(72) Inventor: SHIBAIKE, Naoya, Tokyo 100-6150 (JP); OKANO, Mayuko, Tokyo 100-6150 (JP); KUMAGAI, Shinya, Tokyo 100-6150 (JP); MATSUMURA, Yuki, Tokyo 100-6150 (JP); NAGATA, Satoshi, Tokyo 100-6150 (JP); PI, Qiping, Beijing, 100190 (CN)
(74) Representative: Hoffmann Eitle
(86) International application number: PCT/JP2024/039937
(87) International publication number: WO 2025/105330

(57) **Abstract**

A terminal according to one aspect of the present disclosure includes a transmitting section that transmits capability information related to supporting of dynamic transform precoder indication in operation using a plurality of component carriers in one band, and a control section that controls reception of a configuration of the dynamic transform precoder indication.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied to support a cyclic prefix-orthogonal frequency division multiplexing (CP-OFDM) waveform being a multi-carrier waveform in addition to a discrete Fourier transform-spread-orthogonal frequency division multiplexing (DFT-s-OFDM) waveform being a single-carrier waveform.

Meanwhile, conventional waveform configuration is performed by Radio Resource Control (RRC), and thus waveform switching requires RRC reconfiguration. This increases signaling overhead, and communication throughput may be reduced.

Thus, an object of the present disclosure is to provide a terminal, a radio communication method, and a base station that can appropriately perform waveform switching.

### Solution to Problem

A terminal according to one aspect of the present disclosure includes a transmitting section that transmits capability information related to supporting of dynamic transform precoder indication in operation using a plurality of component carriers in one band, and a control section that controls reception of a configuration of the dynamic transform precoder indication. Advantageous Effects of Invention

According to one aspect of the present disclosure, it is possible to appropriately perform waveform switching.

### Brief Description of Drawings

[FIG. 1] FIG. 1 is a diagram to show a DCI size of option 1-1.
[FIG. 2] FIG. 2 is a diagram to show a DCI size of option 1-2.
[FIG. 3] FIG. 3 is a flowchart to show an example of processing of Embodiment 0.1.
[FIG. 4] FIG. 4 is a flowchart to show an example of processing of Embodiment 0.2.
[FIG. 5] FIG. 5 is a diagram to show definitions of DCI fields "PTRS-DMRS association" and "DMRS sequence initialization."
[FIG. 6] FIG. 6 is a diagram to show an example of configuration patterns for useInterlacePUCCH-PUSCH, resourceAllocation, and RA type.
[FIG. 7] FIG. 7 is a flowchart to show an example of processing of Embodiment 3.
[FIG. 8] FIG. 8 is a diagram to show an example of a MAC payload.
[FIG. 9] FIG. 9 is a diagram to show an example of the number of bits of an RAR grant field.
[FIG. 10] FIG. 10 is a diagram to show an example of a value of a TPC command.
[FIG. 11] FIG. 11 is a diagram to show an example of a Backoff Parameter value.
[FIG. 12] FIG. 12 is a diagram to show an example of an antenna port field of DCI format 0_1.
[FIG. 13] FIG. 13 is a diagram to show an example of setting of a DMRS type when dynamic waveform switching is set.
[FIG. 14] FIGS. 14A and 14B are diagrams to show examples of a method of interpreting codepoints of a given field of DCI when dynamic waveform switching is set and DMRS type 2 is set.
[FIG. 15] FIG. 15 is a diagram to show an example of an RRC IE according to Embodiment A1.
[FIG. 16] FIG. 16 is a diagram to show an example of DCI according to Embodiment A4.
[FIG. 17] FIGS. 17A and 17B are diagrams to show examples of multi-carrier scheduling.
[FIG. 18] FIGS. 18A and 18B are diagrams to show other examples of the multi-carrier scheduling.
[FIG. 19] FIG. 19 is a diagram to show an example of a 1-bit DWS field in multi-carrier DCI.
[FIG. 20] FIG. 20 is a diagram to show an example of waveforms indicated for a plurality of cells according to Embodiment B5.
[FIG. 21] FIG. 21 is a diagram to show an example of an N-bit DWS field in multi-carrier DCI.
[FIG. 22] FIG. 22 is a diagram to show an example of a UE capability related to DWS.
[FIG. 23] FIG. 23 shows an example of a plurality of values of MPR for intra-band contiguous CA.
[FIG. 24] FIG. 24 is a diagram to show an example of a schematic structure of a radio communication system according to one embodiment.
[FIG. 25] FIG. 25 is a diagram to show an example of a structure of a base station according to one embodiment.
[FIG. 26] FIG. 26 is a diagram to show an example of a structure of a user terminal according to one embodiment.
[FIG. 27] FIG. 27 is a diagram to show an example of a hardware structure of the base station and the user terminal according to one embodiment.
[FIG. 28] FIG. 28 is a diagram to show an example of a vehicle according to one embodiment.

### Description of Embodiments

### (CP-OFDM and DFT-s-OFDM)

Uplink (UL) of a radio communication system (for example, NR) supports a Discrete Fourier Transform-Spread-Orthogonal Frequency Division Multiplexing (DFT-s-OFDM) waveform being a single-carrier waveform, in addition to a Cyclic Prefix-Orthogonal Frequency Division Multiplexing (CP-OFDM) waveform being a multi-carrier waveform. A "waveform" in the present disclosure indicates at least one of the CP-OFDM waveform (CP-OFDM based waveform) and the DFT-s-OFDM waveform (DFT-s-OFDM based waveform).

CP-OFDM enables frequency resource assignment to be performed more flexibly. For example, both consecutive Physical Resource Block (PRB) assignment and non-consecutive PRB assignment are allowed. The consecutive PRB assignment is not limited to multiples of 2, 3, and 5. When CP-OFDM is applied, frequency division multiplexing (FDM) may be used for a DeModulation Reference Signal (DMRS) and a PUSCH.

DFT-s-OFDM (or DFT-S-OFDM/DFTS-OFDM) has significant restrictions on frequency resource assignment, but has a low peak-to-average power ratio (PAPR), and is suitable for a UE with limited power.

Note that, regarding communication throughput without consideration of a PAPR, CP-OFDM has communication throughput higher than that of DFT-s-OFDM. Regarding communication throughput with consideration of a PAPP, communication throughput of CP-OFDM is higher than that of DFT-s-OFDM when an SNR (MCS) is high (modulation and coding scheme is 16 QAM or 64 QAM), but DFT-s-OFDM has communication throughput higher than that of CP-OFDM when the SNR (MCS) is low (modulation and coding scheme is QPSK). In other words, a preferable waveform differs depending on an SNR (MCS).

In a normal case, a network (NW) switches a waveform, based on a Signal to Noise Ratio (SNR). Switching between DFT-s-OFDM and CP-OFDM is performed by a transform precoder "transformPrecoder" of an uplink shared channel (Physical Uplink Shared Channel (PUSCH)) configuration (PUSCH-Config) with Radio Resource Control (RRC) signaling. CP-OFDM is applied when the transform precoder is disabled, and DFT-s-OFDM is applied when the transform precoder is enabled. The waveform switching requires RRC reconfiguration. This increases signaling overhead, and communication throughput may be reduced.

It is considered that, for more flexible throughput control, dynamic switching between CP-OFDM and DFT-s-OFDM is performed by DCI/MAC CE. Meanwhile, studies have not yet advanced such dynamic switching.

For example, in an existing specification (for example, 3GPP Rel. 16), as described in (1) to (6) below, sizes of some DCI fields of a DCI format (for example, DCI format 0_0/0_1/0_2) are affected by the waveform switching.
(1) In a "Precoding information and number of layers" field, different tables are used for two waveforms.
(2) In an "Antenna ports" field, different tables are used for two waveforms.
(3) In a "DMRS sequence initialization" field, the field becomes 0 bit when the transform precoder is enabled, and becomes 1 bit when the transform precoder is disabled.
(4) In a "PTRS-DMRS association" field, a DCI size is affected by the transform precoder.
(5) In "Frequency domain resource assignment," a DCI size differs depending on a resource assignment type. Resource assignment to be supported differs depending on a waveform. CP-OFDM and DFT-s-OFDM supports resource assignment types 0, 1, 2 and resource assignment types 1, 2, respectively.
(6) In a "Frequency hopping flag" field, a DCI size differs depending on a resource assignment type. As described above, resource assignment to be supported differs depending on a waveform.

### (Dynamic Switching Between Disabling and Enabling of Transform Precoder)

A UE may receive a configuration indicating that disabling or enabling of a transform precoder for a PUSCH is dynamically switched by using DCI/MAC CE. The UE may receive, via the DCI/MAC CE, an indication indicating enabling or disabling of the transform precoder for the PUSCH. Hereinafter, the dynamic switching with the DCI/MAC CE is sometimes simply described as dynamic switching. Note that the UE may be preconfigured with dynamic switching of a waveform/transform precoder (availability of the switching) by higher layer signaling or the like. Irrespective of the presence or absence of the configuration, dynamic switching of the transform precoder with the DCI/MAC CE may be possible.

For example, DCI signaling based dynamic waveform switching may be performed implicitly or explicitly. For example, the DCI may include a 1-bit field indicating a CP-OFDM or DFT-s-OFDM waveform used for the PUSCH (explicit signaling). For example, the UE may determine/identify the CP-OFDM or DFT-s-OFDM waveform used for the PUSCH, depending on a specific condition from among scheduling information and the like in the DCI (implicit signaling). In this case, an existing DCI format is not changed. The DCI indicating dynamic UL waveform switching for a PUSCH may schedule the PUSCH.

Alternatively, MAC CE signaling based dynamic UL waveform switching may be performed. For example, the MAC CE may include a 1-bit field indicating a CP-OFDM or DFT-s-OFDM waveform used for the PUSCH (explicit signaling). Alternatively, the UE may determine/identify the CP-OFDM or DFT-s-OFDM waveform used for the PUSCH, based on an existing field of the MAC CE (implicit signaling).

For example, the DCI format in the present disclosure may indicate DCI format 0_0/0_1/0_2, or may be another format (for example, DCI format 0_3 for notifying waveform switching). As such another format, such group-common DCI as DCI format 2_x may be used, for example. In this case, waveform switching may be applied a given period of time after ACK transmission by the UE in response to receiving DCI format 2_x.

Switching between disabling and enabling of a transform precoder (waveform switching) in the present disclosure may be waveform switching in the same BWP (switching of a waveform without switching of a BWP). For example, a different transform precoder is configurable for each BWP, and thus it is also considered that a transform precoder is switched by BWP switching, but latency occurs due to the BWP switching. Thus, switching between disabling and enabling of the transform precoder is performed in the same BWP, thereby enabling the latency to be suppressed.

When being configured with DCI/MAC CE based dynamic switching between disabling and enabling of a transform precoder for a PUSCH, the UE may receive, via the DCI/MAC CE, an indication indicating enabling or disabling of the transform precoder for the PUSCH, and may switch, based on the indication, a waveform (CP-OFDM/DFT-s-OFDM) to be used for the PUSCH.

A total DCI size of the DCI format may be constant irrespective of disabling and enabling of the transform precoder. A size of the DCI format may be configured/determined by higher layer signaling (RRC). In other words, the size of the DCI format may not depend on the DCI/MAC CE.

Note, however, that, in some DCI fields, a size of each DCI field may differ depending on disabling and enabling of the transform precoder. The some DCI fields are, for example, "Precoding information and number of layers," "Antenna ports," "DMRS sequence initialization," "PTRS-DMRS association," "Frequency resource assignment," and "Frequency hopping flag." For example, as described in (1) to (6) according to the existing specification described above, the DCI size may differ.

### {Option 1-1}

When dynamic switching (DCI/MAC CE based switching) of a transform precoder for a PUSCH is set for the PUSCH, for each DCI format, a total size of the DCI format may be the larger of a size of each DCI format when the transform precoder is disabled and a size of each DCI format when the transform precoder is enabled.

When the transform precoder is disabled/enabled by the MAC CE, the UE may read each DCI field from the least significant bit (LSB), depending on a size of each DCI field. Alternatively, the UE may read each DCI field from the most significant bit (MSB).

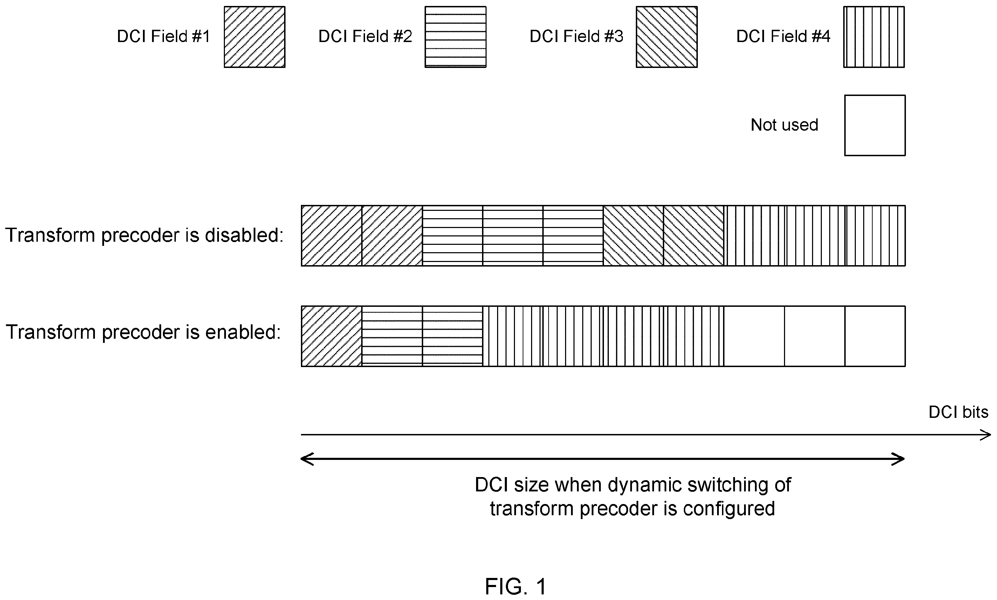

FIG. 1 is a diagram to show the DCI size of option 1-1. According to FIG. 1, the number of DCI bits (sum of DCI Fields #1 to #4) when the transform precoder is disabled is 10 bits, and the number of DCI bits when the transform precoder is enabled is 7 bits. In this case, 10 bits as the larger DCI size are used as a total DCI size when dynamic switching of the transform precoder is set.

In FIG. 1, the smaller DCI bits (DCI bits when the transform precoder is enabled) are mapped from the far left side (least significant bit), but may be mapped from the far right side (most significant bit). In other words, the UE may read each DCI field from the least significant bit or from the most significant bit.

In option 1-1, the total DCI size can be reduced as compared with that of option 1-2 described below.

### {Option 1-2}

When dynamic switching of a transform precoder for a PUSCH is set for the PUSCH, for each DCI format, the larger of a size of a DCI field when the transform precoder is disabled and a size of the DCI field when the transform precoder is enabled may be determined for each field, and a total size of the DCI format may be a total value of the larger sizes in all DCI fields.

In other words, assuming that the number of fields of a given DCI format is N, a total size of the DCI format is calculated as follows. 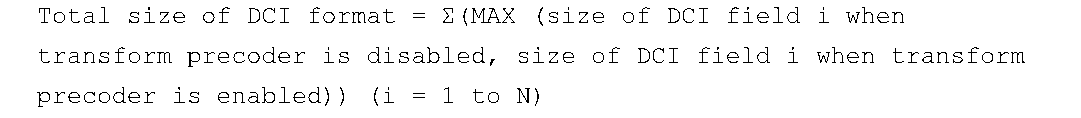 Total size of DCI format = Σ(MAX (size of DCI field i when transform precoder is disabled, size of DCI field i when transform precoder is enabled)) (i = 1 to N)

When the transform precoder is disabled/enabled by the MAC CE, the UE may read each DCI field from the least significant bit (LSB), depending on a size of each DCI field. Alternatively, the UE may read each DCI field from the most significant bit (MSB).

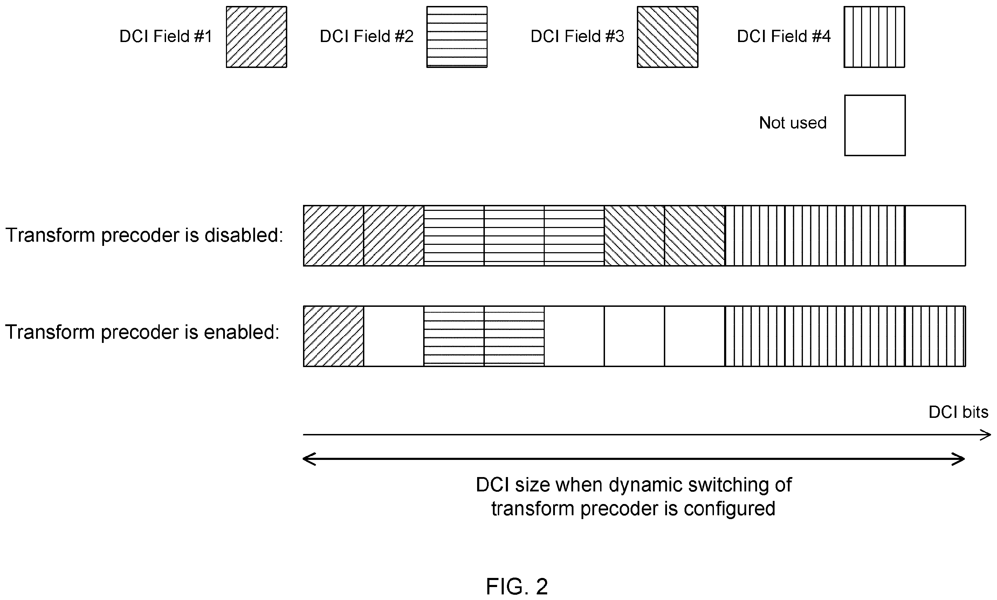

FIG. 2 is a diagram to show the DCI size of option 1-2. According to FIG. 2, in DCI Field #1, a larger size of a DCI field size (2 bits) when the transform precoder is disabled and a DCI field size (1 bit) when the transform precoder is enabled is 2 bits. Likewise, the respective larger sizes in DCI Field #2, DCI Field #3, and DCI Field #4 are 3 bits, 2 bits, and 4 bits. By adding up these sizes (2 + 3 + 2 + 4 = 11), 11 bits are used as a total DCI size when dynamic switching of the transform precoder is set.

In FIG. 2, for the respective fields, smaller DCI bits are mapped from the far left side (least significant bit), but may be mapped from the far right side (most significant bit). In other words, the UE may read each DCI field from the least significant bit or from the most significant bit.

In the example of FIG. 2, a bit at a start location of each field (bit range used for each field) when the transform precoder is disabled is the same as that when the transform precoder is enabled. For example, respective start locations of DCI Field #1, DCI Field #2, DCI Field #3, and DCI Field #4 are the first bit, the third bit, the sixth bit, and the eighth bit. Thus, detection processing of each field by the UE can be facilitated.

According to option 1-2, even when switching between enabling/disabling of a transform precoder is performed, a DCI size to be detected is the same, and thus an increase in UE processing load can be suppressed.

### (FDRA Type)

NR supports, as frequency domain resource allocation (FDRA) types, the following three types: type 0, type 1, and type 2 below.
Type 0: Allocation based on a bitmap (in other words, which may be non-continuous)
Type 1: Continuous allocation based on a resource indication value (RIV)
Type 2: Interlace arrangement (for NR-unlicensed (U))

Applicability depending on a PUSCH waveform of each type is supported as follows.
Type 0: Applicable only to CP-OFDM
Type 1: Applicable to both CP-OFDM and DFTS-OFDM
Type 2: Applicable to both CP-OFDM and DFTS-OFDM

When an RRC parameter "useInterlacePUCCH-PUSCH" is not configured, type 0 or type 1 is used depending on an RRC parameter "resourceAllocation." When type 1 UL data is transmitted without a grant, resourceAllocationType0 or resourceAllocationType1 is set for resourceAllocation. Type 0 is used when resourceAllocationType0 is set, and type 1 is used when resourceAllocationType1 is set. When dynamicSwitch is set, type 0 or type 1 is indicated by scheduling DCI (MSB for FDRA). When useInterlacePUCCH-PUSCH is configured, type 2 is used.

### (DMRS)

A front-loaded DMRS is the first DMRS (in the first symbol or a symbol near the first symbol) for faster demodulation. An additional DMRS can be configured by RRC for a high-speed moving UE or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding = disabled) and DFT-S-OFDM (transport precoding = enabled). In DMRS configuration type 1, a DMRS sequence is mapped to one subcarrier for each two subcarriers in a frequency domain, and thus up to two DMRSs can be FDMed. DMRS configuration type 2 is applicable only to CP-OFDM. In DMRS configuration type 2, a DMRS sequence is mapped to two continuous subcarriers for each six subcarriers in a frequency domain, and thus up to three DMRSs can be FDMed.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

A double-symbol DMRS is used for more DMRS ports (especially for MU-MIMO). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are considered.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same RE (time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC having a length of 2. In a plurality of DMRS CDM groups (two DMRS CDM groups), two DMRS ports are multiplexed by FDM.

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC. In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B has been described here, but the same applies to DMRS mapping type A.

In parameters for a PDSCH DMRS (existing DMRS port table, Rel-15 DMRS port table), DMRS ports 1000 to 1007 and DMRS ports 1000 to 1011 can be used for DMRS configuration type 1 and DMRS configuration type 2, respectively.

In parameters for a PUSCH DMRS (existing DMRS port table, Rel-15 DMRS port table), DMRS ports 0 to 7 and DMRS ports 0 to 11 can be used for DMRS configuration type 1 and DMRS configuration type 2, respectively.

### (Reference Signal Port)

For orthogonalization of a MIMO layer and the like, reference signals (for example, demodulation reference signals (DMRSs), CSI-RSs) with a plurality of ports are used.

For example, for single user MIMO (SU-MIMO), different DMRS ports/CSI-RS ports may be configured for each layer. For multi user MIMO (MU-MIMO), different DMRS ports/CSI-RS ports may be configured for each layer in one UE and for each UE.

Note that it is expected that using the number of CSI-RS ports greater than the number of layers used for data enables more accurate channel state measurement based on this CSI-RS, thereby contributing to throughput improvement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the FDM above, a comb-shaped transmission frequency pattern (comb-shaped resource set) is used. As the FD-OCC above, a cyclic shift (CS) is used. The TD-OCC above can be applied only to the double-symbol DMRS.

An OCC in the present disclosure may be interpreted as an orthogonal code, orthogonalization, a cyclic shift, and the like, and vice versa.

Note that a DMRS type may be referred to as a DMRS configuration type.

Among DMRSs, a DMRS to which resource mapping in units of two consecutive (adjacent) symbols is applied may be referred to as a double-symbol DMRS, and a DMRS to which resource mapping in units of one symbol is applied may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Combs and two types of CSs (Comb2 + 2CS).

In a case of DMRS configuration type 1 and a double-symbol DMRS, a Comb, a CS, and a TD-OCC may be used for orthogonalization. For example, up to eight APs may be supported by using two types of Combs, two types of CSs, and TD-OCCs ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to twelve APs may be supported by applying an orthogonal code (2-FD-OCC) to 2 REs adjacent to each other in a frequency direction and applying TD-OCCs ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, such a DMRS port group orthogonalized by an FD-OCC/TD-OCC as that described above is also referred to as a code division multiplexing (CDM) group.

Different CDM groups are FDMed, and thus are orthogonal to each other. On the other hand, there is a case where, in the same CDM group, orthogonality of an applied OCC is lost due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for FD-OCC and a parameter (which may be referred to as a sequence element or the like) wₜ(l') for TD-OCC.

Both of the TD-OCC and FD-OCC for the DMRS of Rel-15 NR correspond to an OCC having a sequence length (which may be referred to as an OCC length) = 2. Thus, possible values of each of k' and l' above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two Rel-15 DMRS port tables for PDSCH (association between antenna port indices (numbers) and parameters) described above correspond to respective DMRS configuration types 1 and 2. Note that p and Δ indicate an antenna port number and a parameter for shifting (offsetting) a frequency resource, respectively.

For example, {w_{f}(0), w_{f}(1)} = {+1, +1} and {w_{f}(0), w_{f}(1)} = {+1, -1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)} = {+1, +1} and {wₜ(0), wₜ(1)} = {+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that, for each applicable DMRS configuration type, a maximum number of orthogonal DMRS ports is doubled for both a single-symbol DMRS and a double-symbol DMRS.

In Rel. 15, cases 1 to 4 below can be configured.

### {Case 1} Single-symbol DMRS of DMRS configuration type 1

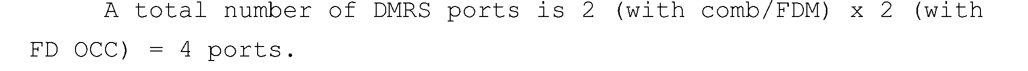

A total number of DMRS ports is 2 (with comb/FDM) x 2 (with FD OCC) = 4 ports.

### {Case 2} Double-symbol DMRS of DMRS configuration type 1

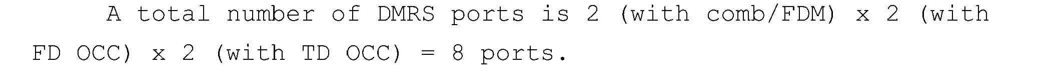

A total number of DMRS ports is 2 (with comb/FDM) x 2 (with FD OCC) x 2 (with TD OCC) = 8 ports.

### {Case 3} Single-symbol DMRS of DMRS configuration type 2

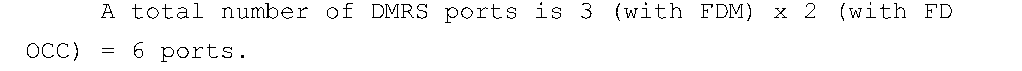

A total number of DMRS ports is 3 (with FDM) x 2 (with FD OCC) = 6 ports.

### {Case 4} Double-symbol DMRS of DMRS configuration type 2

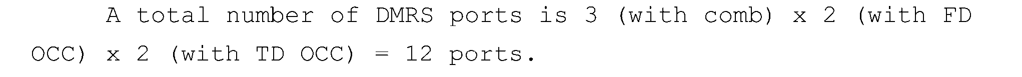

A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for cases 1, 2, 3, and 4, respectively.

For the increased numbers of DMRS ports, the following five options (methods of increasing the number of DMRS ports) are under study.

### <Option 1>

- Introduction of a new OCC having a length (for example, 4 or 6) greater than that of an existing OCC.

In option 1, items to be studied include a possibility of performance degradation, a possibility of scheduling restriction, backward compatibility, and the like in a case of a large delay spread.

### <Option 2>

- Use of a TD-OCC over a plurality of non-consecutive DMRS symbols (for example, a TD-OCC over front-loaded DMRSs/additional DMRSs).

In option 2, items to be studied include a possibility of performance degradation, a possibility of scheduling restriction (for example, a method of applying frequency hopping), a possibility of a limited DMRS configuration (for example, a limited number of additional DMRSs), backward compatibility, and the like in a case of a high UE speed.

### <Option 3>

- Increasing the number of CDM groups (for example, increasing the number of combs/times of FDM).

In option 3, items to be studied include a possibility of performance degradation, backward compatibility, and the like in a case of a large delay spread.

### <Option 4>

- Increasing the number of orthogonal DMRS ports by reusing additional DMRS symbols.

In option 4, items to be studied include a possibility of performance degradation, a possibility of a limited DMRS configuration (for example, a limited number of additional DMRSs), backward compatibility, and the like in a case of a high UE speed.

### <Option 5>

- Use of a TD-OCC over a plurality of non-consecutive DMRS symbols, the TD-OCC being combined with an FD-OCC/FDM (reusing additional DMRS symbols to improve channel estimation performance).

In option 5, items to be studied include a possibility of performance degradation, a possibility of scheduling restriction (for example, a method of applying frequency hopping), a possibility of a limited DMRS configuration (for example, a limited number of additional DMRSs), backward compatibility, and the like in a case of a high UE speed.

In option 1, a new FD-OCC for PDSCH/PUSCH DMRS may follow, for DMRS enhanced type 1, at least one of some options below.
<<Option 1-1>> A new FD-OCC having a length of 6 is applied to 6 REs of a DMRS in one PRB in one CDM group.
<<Option 1-2>> A new FD-OCC having a length of 4 is applied to 4 REs of a DMRS in one PRB or over a plurality of consecutive PRBs, in one CDM group.

In option 1, for the new FD-OCC for PDSCH/PUSCH DMRS, a new FD-OCC having a length of 4 is applied to 4 REs of a DMRS in one PRB in one CDM group, for DMRS enhanced type 2. A new FD-OCC having a length of 6 may be supported for DMRS enhanced type 2.

In the present disclosure, existing FD-OCC #0 and existing FD-OCC #1 may equal {+1 +1} and {+1 -1}, respectively.

The new FD-OCC may be any one of the following some OCCs.

### {OCC 1-1}

A length-4 OCC based on a four-by-four Walsh matrix (sequence). Four sequences are obtained for OCC index i = {0, 1, 2, 3}.

### {OCC 1-2}

A length-4 OCC based on a cyclic shift. Four sequences are obtained by using cyclic shift {i·0, i·π/2, i·π, i·3π/2} for OCC index i = {0, 1, 2, 3}.

In OCC 1-1 and OCC 1-2, each of the first and second halves of length-4 OCC #0 (OCC corresponding to OCC index 0) and each of the first and second halves of length-4 OCC #1 (OCC corresponding to OCC index 1) are the same as length-2 OCC #0 (OCC corresponding to OCC index 0) and length-2 OCC #1 (OCC corresponding to OCC index 1), respectively.

In the present disclosure, an OCC (FD-OCC/TD-OCC) corresponding to OCC index i may be referred to as OCC #i.

Part of the plurality of sequences of the new FD-OCC may be associated with a Rel-15 DMRS port index.

When a length-2 FD-OCC is used, a Rel-15 DMRS port table for DMRS configuration type 1 and a Rel-15 DMRS port table for DMRS configuration type 2 may be used.

Enhanced DMRS configuration type 1 uses frequency domain arrangement and a new FD-OCC for DMRS configuration type 1. Enhanced DMRS configuration type 2 uses frequency domain arrangement and a new FD-OCC for DMRS configuration type 2.

In the present disclosure, DMRS configuration type 1, DMRS type 1, DMRS type = 1, and DMRS Type 1 may be interchangeably interpreted. In the present disclosure, DMRS configuration type 2, DMRS type 2, DMRS type = 2, and DMRS Type 2 may be interchangeably interpreted.

In the present disclosure, enhanced DMRS configuration type 1, DMRS enhanced type 1, DMRS enhanced type = 1, DMRS eType 1, and Rel-18 DMRS type 1 may be interchangeably interpreted. In the present disclosure, enhanced DMRS configuration type 2, DMRS enhanced type 2, DMRS enhanced type = 2, DMRS eType 2, and Rel-18 DMRS type 2 may be interchangeably interpreted.

In the present disclosure, a maximum DMRS length and maxLength may be interchangeably interpreted.

In the present disclosure, an existing FD-OCC, a length-2 FD-OCC, a Rel-15 FD-OCC, and w_{f}(k') may be interchangeably interpreted. In each embodiment, a new FD-OCC, an FD-OCC longer than 2, a Rel-18 FD-OCC, and w_{f}(k') may be interchangeably interpreted.

A Rel-18 DMRS port table may indicate a DMRS port corresponding to the new FD-OCC (p is 0 or greater). At least some of p values in the Rel-18 DMRS port table may overlap with a p value in a Rel-15 DMRS port table. The UE may use the Rel-18 DMRS port table when use of the new FD-OCC is configured/indicated, and the UE may use the Rel-15 DMRS port table when use of the new FD-OCC is not configured/indicated.

The same DMRS port indices (DMRS ports 0 to 7) as those of Rel-15 DMRS ports may be used for DMRS ports for DMRS enhanced type 1 with new FD-OCCs #0 and #1. DMRS port indices (DMRS ports 8 to 15) different from those of Rel-15 DMRS ports may be used for DMRS ports with new FD-OCCs #2 and #3.

The same DMRS port indices (DMRS ports 0 to 11) as those of Rel-15 DMRS ports may be used for DMRS ports for DMRS enhanced type 2 with new FD-OCCs #0 and #1. DMRS port indices (DMRS ports 12 to 23) different from those of Rel-15 DMRS ports may be used for DMRS ports with new FD-OCCs #2 and #3.

### (Analysis)

Conventional waveform configuration is performed by Radio Resource Control (RRC), and thus waveform switching requires RRC reconfiguration. This increases signaling overhead, and communication throughput may be reduced. Thus, dynamic switching (DCI/MAC CE based switching) of a transform precoder for a PUSCH is performed as described above, thereby enabling waveform switching to be performed easily (promptly). Note, however, that, in this case, there are points about various configurations/controls that remain unclear, as described in problems 0 to 4 below.

Thus, the inventors of the present invention came up with the idea of a terminal that appropriately performs dynamic switching between disabling and enabling of a transform precoder (waveform switching) for a PUSCH.

### (Various Interpretations)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, "having a capability of..." may be interchangeably interpreted as "supporting/reporting a capability of..."

In the present disclosure, ceil(x) and a ceiling function may be interchangeably interpreted. In the present disclosure, floor(x) and a floor function may be interchangeably interpreted. In the present disclosure, sqrt (x) and square root (root) may be interchangeably interpreted. In the present disclosure, x mod y, mod (x, y), a mod function, and a modulo operation may be interchangeably interpreted. In the present disclosure, Σ_{i=M}^{N}f(i), a summation of f(i) over i = M, M+1, ..., N, and f(M) + f(M+1) + ... + f(N) may be interchangeably interpreted. C(n, k), the number of combinations (combinatorial coefficient) of selecting k values out of n values, binomial coefficients, ₙCₖ, and Cₙ^{k} may be interchangeably interpreted.

In the present disclosure, a_{b}, a_b, and a notation in which b is attached to a at the lower right may be interchangeably interpreted. In the present disclosure, a^{c}, a^c, and a notation in which c is attached to a at the upper right may be interchangeably interpreted. In the present disclosure, a_{b}^{c}, a_b^c, and a notation in which b is attached to a at the lower right and c is attached thereto at the upper right may be interchangeably interpreted. In the present disclosure, x^{~} may be expressed by adding "~" above x, or may be referred to as x tilde. In the present disclosure, x⁻ may be expressed by adding "-" above x, or may be may be referred to as x bar.

In the present disclosure, a frequency range corresponding to FR1 may be from 410 to 7125 MHz. In the present disclosure, FR2 may include FR2-1 and FR2-2, a frequency range corresponding to FR2-1 may be from 24250 to 52600 MHz, and a frequency range corresponding to FR2-1 may be from 52600 to 71000 MHz.

In the present disclosure, application/use of CP-OFDM and (disabling of) a transform precoder (transformPrecoder) being disabled may be interchangeably interpreted. Application/use of DFT-s-OFDM and (enabling of) a transform precoder being enabled may be interchangeably interpreted. Disabling/enabling of a transform precoder, switching of a transform precoder, and switching of a waveform (CP-OFDM/DFT-s-OFDM) may be interchangeably interpreted. A PUSCH waveform, a waveform, and a transform precoder may be interchangeably interpreted. CP-OFDM and a CP-OFDM waveform may be interchangeably interpreted. DFT-s-OFDM and a DFT-s-OFDM waveform may be interchangeably interpreted. Enabled and On may be interchangeably interpreted. Disabled and Off may be interchangeably interpreted.

In the present disclosure, dynamic switching of a PUSCH waveform being possible, dynamic switching of a PUSCH waveform being set, DWS being set, and DWS being enabled may be interchangeably interpreted.

In the present disclosure, a DMRS type, a DMRS type in an uplink DMRS configuration (dmrs-Type in DMRS-UplinkConfig), and a DMRS configuration type may be interchangeably interpreted. In the present disclosure, DMRS type 1 and a type in which a DMRS can be arranged in 6 REs for 1 RB in a frequency domain may be interchangeably interpreted. In the present disclosure, DMRS type 2 and a type in which a DMRS can be arranged in 4 REs for 1 RB in a frequency domain may be interchangeably interpreted.

In the present disclosure, DMRS type 1 and enhanced DMRS type 1 (DMRS-eType1) may be interchangeably interpreted. In the present disclosure, DMRS type 2 and enhanced DMRS type 2 (DMRS-eType2) may be interchangeably interpreted. In other words, embodiments to be applied to DMRS types 1 and 2 may be applied to enhanced DMRS types 1 and 2.

In DCI format 0_X of the present disclosure, X may be 0/1/2/3 or a combination of a number and an alphabet.

In the present disclosure, a first field, a field for multi-carrier scheduling, and a time domain resource assignment/allocation (TDRA)/frequency domain resource assignment/allocation (FDRA) field for multi-carrier scheduling may be interchangeably interpreted.

In the present disclosure, a second field, a DWS field, a DWS indicator, and DWS indication may be interchangeably interpreted.

In the present disclosure, a third field, a specific field, a specific DCI field, and a field for at least one of DMRS sequence initialization, PTRS-DMRS association, an antenna port, and a TPMI (precoding information and number of layers) may be interchangeably interpreted.

In the present disclosure, a DWS configuration, a DWS configuration of 'enabled,' and a higher layer parameter dynamicTransformPrecoderIndicationDCI-0-1/dynamicTransformPrecoderIndicationDCI-0-2 may be interchangeably interpreted. In the present disclosure, a DWS indication, a DWS indication in DCI, a DWS field, and a transform precoder indicator field may be interchangeably interpreted. In the present disclosure, a DWS indication with a bit value of 0, an indication that a transform precoder is enabled, and an indication of DFT-s-OFDM may be interchangeably interpreted. In the present disclosure, a DWS indication with a bit value of 1, an indication that a transform precoder is disabled, and an indication of CP-OFDM may be interchangeably interpreted.

### (Radio Communication Method)

As described above, the UE may receive a configuration indicating that disabling or enabling of a transform precoder for a PUSCH is dynamically switched by using DCI/MAC CE. The UE may receive, via the DCI/MAC CE, an indication indicating enabling or disabling of the transform precoder for the PUSCH. In other words, the UE may be capable of dynamically switching a PUSCH waveform. In this case, at least one of processings of some embodiments below may be employed.

In the present disclosure, when a PUSCH waveform can be dynamically switched, at least one of the methods (dynamic switching between disabling and enabling of the transform precoder) described above may be employed.

### <Problem X0>

It remains unclear what values are set for RRC parameters "transformPrecoder" and "maxRank" when a PUSCH waveform can be dynamically switched. For example, transformPrecoder is expected to have a value corresponding to any one of "enabled" (in other words, DFT-s-OFDM), "disabled" (in other words, CP-OFDM), or "unrestricted." For example, configuration of the RRC parameter "transformPrecoder" affects a DCI size, which affects UE processing load and communication overhead, and thus it is preferable to clarify this configuration.

### <Embodiment X0.1>

When the UE is capable of dynamically switching a PUSCH waveform, the configuration of one of the aspects to be described below may be applied to the RRC parameter "transformPrecoder."

### {Aspect 1}

When the PUSCH waveform can be dynamically switched, the RRC parameter "transformPrecoder" may be configured as enabled. This reduces a DCI size assumed by the UE. In other words, the DCI size can be configured to be small by a NW (base station, gNB), and thus communication overhead can be suppressed.

### {Aspect 2}

When the PUSCH waveform can be dynamically switched, the RRC parameter "transformPrecoder" may be configured as disabled. Thus, even when the PUSCH waveform is switched to DFT-s-OFDM, the UE assumes the same DCI size as that for CP-OFDM, and thus UE processing load can be reduced.

### {Aspect 3}

When the PUSCH waveform can be dynamically switched, the RRC parameter "transformPrecoder" may be ignored. In other words, restriction on transformPrecoder may be absent.

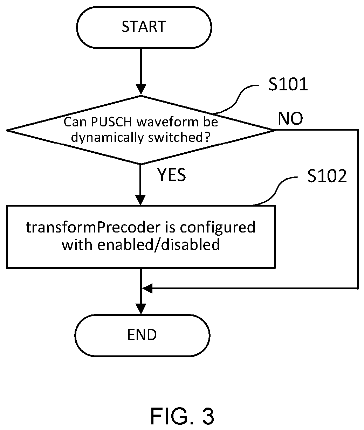

FIG. 3 is a flowchart to show an example of the processing of Embodiment X0.1. When receiving a configuration indicating that dynamic switching of the PUSCH waveform is possible (step S101), the UE receives an RRC parameter "transformPrecoder" configured as enabled/disabled (step S102).

As the RRC parameters, a plurality of transformPrecoders are present, but transformPrecoder to be referred to by the UE may differ for each case (each timing). For example, options 1 and 2 below may be applied. When dynamic switching of the PUSCH waveform is set, the processing of options 1 and 2 below may be applied at a timing before indication of the dynamic switching of the PUSCH waveform.

### {Option 1}

The UE may refer to/consider transformPrecoder in an RRC IE (for example, PUSCH-Config or ConfiguredGrantConfig) corresponding to a PUSCH to be transmitted. This option may be applied to the UE after dedicated (UE-dedicated) RRC configuration.

### {Option 2}

The UE may refer to/consider transformPrecoder in a specific RRC IE (for example, msg3-transformPrecoder in RACH-ConfigCommon and the like) irrespective of a PUSCH type. This option may be applied to the UE before dedicated (UE-dedicated) RRC configuration.

According to the present embodiment, it is possible to clarify a value to be configured and UE operation, for an RRC parameter "transformPrecoder" when a PUSCH waveform can be dynamically switched.

### <Embodiment X0.2>

When the UE is capable of dynamically switching a PUSCH waveform, the UE may receive, as a maximum rank (maxRank) of an RRC parameter, a value/setting based on one of the aspects/options below. In other words, the UE may assume, for a value/setting of maxRank, application of one of the aspects/options below. maxRank is a parameter indicating a maximum value of a UL (PUSCH) transmission rank (layer). The UE controls PUSCH transmission, based on maxRank.

### {Aspect 1}

There may be no restriction on a setting of maxRank. In other words, even when dynamic switching of the PUSCH waveform is set, any value may be set for maxRank.

### {Aspect 2}

A specific value or a value smaller than the specific value may be set for maxRank. The specific value may be determined (fixed) in a specification, for example. Alternatively, the specific value may be set/indicated by RRC/MAC CE/DCI. For example, when dynamic switching of the PUSCH waveform is set, maxRank (specific value) may be 1.

In a case where maxRank is restricted, if maxRank is set only to 1, for example, a bit width of a Transmitted Precoding Matrix Indicator (TPMI) is the same irrespective of a PUSCH waveform. In other words, a DCI size becomes the same, and thus UE processing load can be reduced.

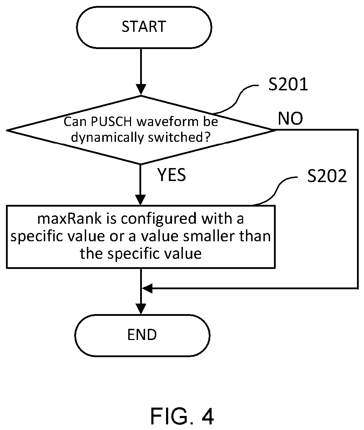

FIG. 4 is a flowchart to show an example of the processing of Embodiment X0.2. FIG. 4 shows an example of Aspect 2 above. When receiving a configuration indicating that dynamic switching of the PUSCH waveform is possible (step S201), the UE receives, as a value of the RRC parameter "maxRank," a configuration indicating the specific value or a value smaller than the specific value (step S202).

According to the present embodiment, it is possible to clarify a value to be configured, for an RRC parameter "maxRank" when a PUSCH waveform can be dynamically switched.

### <Problem X1>

It remains unclear how DCI fields that are present (1 bit or more) or absent (0 bit) depending on a PUSCH waveform are handled when a PUSCH waveform can be dynamically switched. The DCI fields are, for example, PTRS-DMRS association and DMRS sequence initialization.

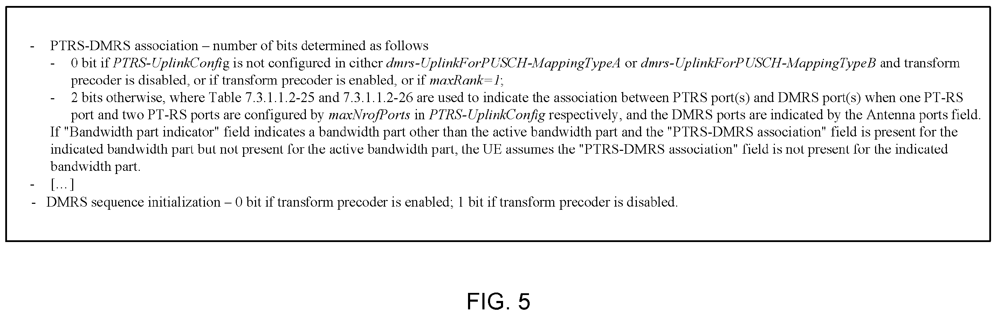

FIG. 5 is a diagram to show definitions of the DCI fields "PTRS-DMRS association" and "DMRS sequence initialization." As shown in FIG. 5, DMRS sequence initialization is 0 bits when a PTRS (PTRS-UplinkConfig) is not configured and CP-OFDM is applied (transform precoder is disabled), when DFTS-OFDM is applied (if transform precoder is enabled), or when maxRank = 1, otherwise DMRS sequence initialization is 2 bits. DMRS sequence initialization is 0 bits when DFTS-OFDM is applied, and is 1 bit when CP-OFDM is applied.

### <Embodiment X1>

When a PUSCH waveform can be dynamically switched, and a specific waveform is indicated for a PUSCH, a UE may process (assume) a specific field of scheduling DCI for the PUSCH, based on a specific rule.

The specific field of the DCI may be at least one of a demodulation reference signal (DMRS) sequence initialization field and a phase tracking reference signal (PTRS)-DMRS association field.

The specific rule may be a case that the UE ignores the specific field of the DCI.

The specific waveform may be DFT-s-OFDM or CP-OFDM.

For example, when the DCI is received, the PUSCH waveform can be dynamically switched, and DFT-s-OFDM is indicated for the PUSCH, the UE ignores at least one of the DMRS sequence initialization field and the PTRS-DMRS association field of the DCI.

The example above is not restrictive, and the UE may, when the condition for the DMRS sequence initialization field or the PTRS-DMRS association field being 0 bits described in FIG. 5 is satisfied, ignore the field. This enables UE processing load to be reduced.

In Embodiment X1, when the PUSCH waveform is dynamically switched, the number of bits of each DCI field/overall size of the DCI may follow the rule for CP-OFDM, irrespective of an exact waveform used by the UE. The number of bits of each DCI field/overall size of the DCI may not follow the rule for CP-OFDM.

### <Problem X2>

As described above (FDRA type), type 0 RA cannot be used for DFT-s-OFDM, and thus type 1 or type 2 is required to be used when a PUSCH waveform is switched to DFT-s-OFDM. For example, it is preferable that an RRC parameter indicating a PUSCH waveform always correspond to a setting/indication of an FDRA type. Meanwhile, configuration of FDRA and interlace use indication (useInterlacePUCCH-PUSCH) when a PUSCH waveform is dynamically switched remains unclear.

### <Embodiment X2>

When a PUSCH waveform can be dynamically switched, and a specific waveform is indicated for a PUSCH, a UE may receive a specific field and a specific RRC parameter of DCI corresponding to scheduling of the PUSCH (may assume reception of the specific field and the specific RRC parameter of the DCI), based on a specific rule. The UE may control PUSCH transmission, based on the received specific field and specific RRC parameter of the DCI.

The specific field of the DCI may be FDRA or a frequency hopping flag.

The specific RRC parameter may be resource allocation (resourceAllocation) or indication of use of an interlace for PUCCH and PUSCH (useInterlacePUCCH-PUSCH).

The specific waveform may be DFT-s-OFDM or CP-OFDM.

The specific rule may be a case that resourceAllocation is either resourceAllcationType1 or dynamicSwitch. When resourceAllocation is dynamicSwitch, the most significant bit (MSB) of FDRA is to be "1." In other words, FDRA type 1 is to be indicated. This specific rule may be applied when useInterlacePUCCH-PUSCH is not configured.

The specific rule may be a case that resourceAllocation is resourceAllcationType1.

The specific rule may be a case that a frequency hopping flag is determined in accordance with at least one of resourceAllocation and FDRA based on the specific rule above.

The specific rule may be a case that useInterlacePUCCH-PUSCH (use of an interlace for PUCCH and PUSCH) is configured as enabled (use of an interlace for PUCCH and PUSCH).

### {Specific Examples}

For example, when the PUSCH waveform can be dynamically switched, and DFT-s-OFDM is indicated for the PUSCH, the UE may receive configuration information (RRC parameter) indicating dynamic switching (dynamicSwitch) as resourceAllocation and indication information (DCI) indicating type 1 as FDRA (may assume the reception). The UE may control PUSCH transmission, based on the configuration information and the indication information.

For example, when the PUSCH waveform can be dynamically switched, and DFT-s-OFDM is indicated for the PUSCH, the UE may receive configuration information (RRC parameter) indicating type 1 (resourceAllcationType1) as resourceAllocation (may assume the reception). The UE may control PUSCH transmission, based on the configuration information.

For example, when the PUSCH waveform can be dynamically switched, and DFT-s-OFDM is indicated for the PUSCH, the UE may receive configuration information indicating that useInterlacePUCCH-PUSCH (use of an interlace for PUCCH and PUSCH) is enabled (may assume the reception). The UE may control PUSCH transmission, based on the configuration information.

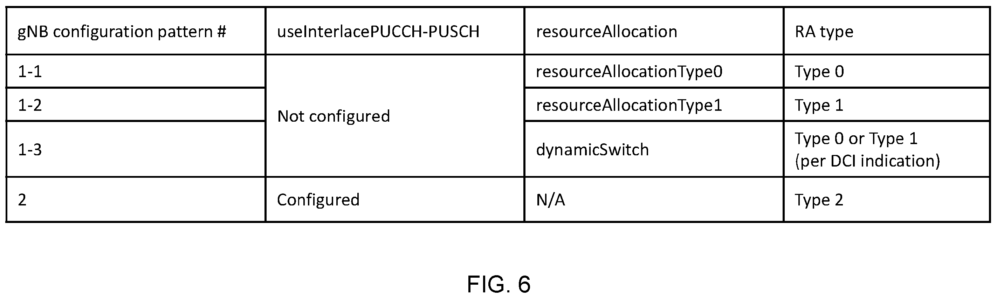

FIG. 6 is a diagram to show an example of configuration patterns for useInterlacePUCCH-PUSCH, resourceAllocation, and RA type. When dynamic waveform switching is possible, (1) and (2) below may be applied to the configuration patterns shown in FIG. 6.
(1) The UE may be allowed to expect any pattern when a default value of transformPrecoder is disabled (CP-OFDM is indicated/used), but may not be allowed to apply patterns 1-1 and 1-3 when the default value is enabled (DFT-s-OFDM is indicated/used).
(2) When the default value of transformPrecoder is enabled, the UE may be allowed to expect a pattern other than patterns 1-1 and 1-3 in which DCI indicating type 0 is applied, but when CP-OFDM is indicated/used, the UE may expect any pattern.

The processing of the present embodiment may be applied irrespective of a waveform indicated for the PUSCH. In other words, when the PUSCH waveform can be dynamically switched, the UE may control, based on the specific rule above, the specific field and specific RRC parameter above of DCI corresponding to scheduling of the PUSCH.

According to the present embodiment, even when a PUSCH waveform is dynamically switched, a case of an error (for example, a case that type 0 FDRA is configured when DFT-s-OFDM is applied) can be avoided.

### <Problem X3>

Types of PUSCHs applicable when a PUSCH waveform can be dynamically switched remain unclear. For example, it remains unclear whether message 3 (Msg3)/message A (msg3-TransformPrecoder/msgA-TransformPrecoder) are applicable as the PUSCHs. It remains unclear whether a CG-PUSCH (transformPrecoder in ConfiguredGrantConfig) is applicable as the PUSCHs. It remains unclear what processing is performed when dynamic switching of PUSCH waveforms is supported for these PUSCHs.

### <Embodiment X3>

A UE may apply dynamic switching of a PUSCH waveform only to a PUSCH of a specific type. In other words, the UE may, when receiving a configuration indicating dynamic switching of the PUSCH waveform, perform control so as to perform dynamic switching only for the PUSCH of the specific type, based on DCI/MAC CE. The PUSCH of the specific type may be, for example, at least one of (1) to (4) below.

(1) DCI Grant (DG)-PUSCH (PUSCH scheduled by DCI)
(2) Type 1 configured grant (CG)-PUSCH (PUSCH transmission configured by higher layer signaling)
(3) Type 2 CG-PUSCH (PUSCH transmission configured by higher layer signaling and activated/deactivated by DCI)
(4) PUSCH scheduled by random access response (RAR) (message 3 PUSCH or message A PUSCH) This RAR may be RAR in contention based random access (CBRA) or RAR in contention free random access (CFRA). For example, in CFRA, a base station (gNB) recognizes the UE and a channel state therefor, and thus a waveform can be appropriately adjusted.

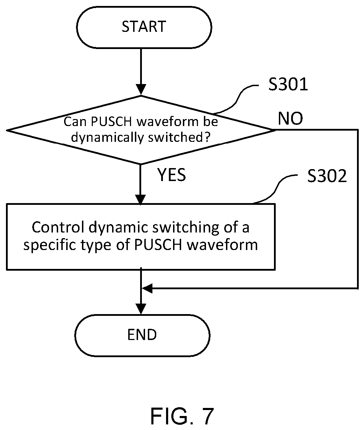

FIG. 7 is a flowchart to show an example of the processing of Embodiment X3. When receiving a configuration indicating that dynamic switching of the PUSCH waveform is possible (step S301), the UE performs control so as to dynamically switch only a waveform of the PUSCH of the specific type, based on DCI/MAC CE (step S302).

### <Embodiment X4.1>

Dynamic switching of a type 1 CG-PUSCH (PUSCH transmission configured by higher layer signaling) waveform may be applied, and at least one of the methods of (1-1) to (1-4) below may be supported. As specific examples of the methods of (1-1) to (1-4) below, the above-described methods (dynamic switching between disabling and enabling of the transform precoder) may be employed.

(1-1) The UE may receive an explicit indication indicating enabling/disabling of transformPrecoder (DFT-s-OFDM/CP-OFDM), via DCI (explicit signaling).
(1-2) The UE may receive an implicit indication indicating enabling/disabling of transformPrecoder (DFT-s-OFDM/CP-OFDM), via DCI (implicit signaling).
(1-3) The UE may receive an explicit indication indicating enabling/disabling of transformPrecoder (DFT-s-OFDM/CP-OFDM), via a MAC CE (explicit signaling).
(1-4) The UE may receive an implicit indication indicating enabling/disabling of transformPrecoder (DFT-s-OFDM/CP-OFDM), via a MAC CE (implicit signaling).

The methods of (1-1) to (1-4) may be applied to a type 1 CG-PUSCH in a manner different from that for a PUSCH of another type (type 2 CG-PUSCH, DG-PUSCH). The methods of (1-1) to (1-4) may be applied to a type 1 CG-PUSCH in the same manner as that for a PUSCH of another type.

DCI is not used for scheduling of a conventional type 1 CG-PUSCH. Thus, it is preferable that DCI be newly defined when (1-1) and (1-2) above are applied. For example, as the DCI of (1-1) and (1-2) above, any one of (2-1) or (2-2) below may be applied.

(2-1) DCI for scheduling UL/DL unicast data may be applied. Note that a UL/DL-SCH actually scheduled by the DCI may be absent.
(2-2) DCI for scheduling data other than unicast data may be applied. For example, this DCI may be applied when group-common DCI is used.

According to the present embodiment, it is possible to clarify processing when dynamic switching of a type 1 CG-PUSCH waveform is applied.

### <Embodiment X4.2>

Dynamic switching of a type 2 CG-PUSCH (PUSCH transmission configured by higher layer signaling and activated/deactivated by DCI) waveform may be applied, and at least one of the methods of (1-1) to (1-4) of Embodiment X4.1 may be supported.

The methods of (1-1) to (1-4) may be applied to a type 2 CG-PUSCH in a manner different from that for a PUSCH of another type (type 1 CG-PUSCH, DG-PUSCH). The methods of (1-1) to (1-4) may be applied to a type 2 CG-PUSCH in the same manner as that for a PUSCH of another type.

DCI for activation/deactivation is used for a conventional type 2 CG-PUSCH, and thus the DCI may be reused. Specifically, as the DCI of (1-1) and (1-2) above, any one of (2-1) or (2-2) below may be applied.

(2-1) DCI for scheduling UL/DL unicast data may be applied. Note that a UL/DL-SCH actually scheduled by the DCI may be absent. For example, DCI for activation/deactivation of a type 2 CG-PUSCH may be applied.
(2-2) DCI for scheduling data other than unicast data may be applied. For example, this DCI may be applied when group-common DCI is used.

According to the present embodiment, it is possible to clarify processing when dynamic switching of a type 2 CG-PUSCH waveform is applied.

### <Embodiment X5>

Dynamic switching of a message 3/message A PUSCH (PUSCH scheduled by random access response (RAR)) waveform may be applied, and at least one of the methods of (1-1) to (1-4) of Embodiment X4.1 may be supported. Alternatively, (1-5) below may be applied.

(1-5) The UE may receive an explicit/implicit indication indicating enabling/disabling of transformPrecoder (DFT-s-OFDM/CP-OFDM), via RAR.

The methods of (1-1) to (1-5) may be applied to a message 3/message A PUSCH in a manner different from that for a PUSCH of another type (type 1/type 2 CG-PUSCH, DG-PUSCH). The methods of (1-1) to (1-5) may be applied to a message 3/message A PUSCH in the same manner as that for a PUSCH of another type.

DCI for activation/deactivation is used for a conventional message 3/message A PUSCH, and thus the DCI may be reused. Specifically, as the DCI of (1-1) and (1-2) above, any one of (2-1) or (2-2) below may be applied.

(2-1) DCI for scheduling UL/DL unicast data may be applied. Note that a UL/DL-SCH actually scheduled by the DCI may be absent. For example, the DCI may be DCI 1_0 having a cyclic redundancy check (CRC) scrambled by an RA Radio Network Temporary Identifier (RNTI) or a message B RNTI.
(2-2) DCI for scheduling data other than unicast data may be applied. For example, this DCI may be applied when group-common DCI is used.

For dynamic waveform switching for the message 3/message A PUSCH, at least one of (3-1) and (3-2) below related to RAR-based indication may be supported. The UE may dynamically switch a waveform of the message 3 PUSCH or the message A PUSCH, based on at least one of a MAC sub-header and a MAC payload for RAR.

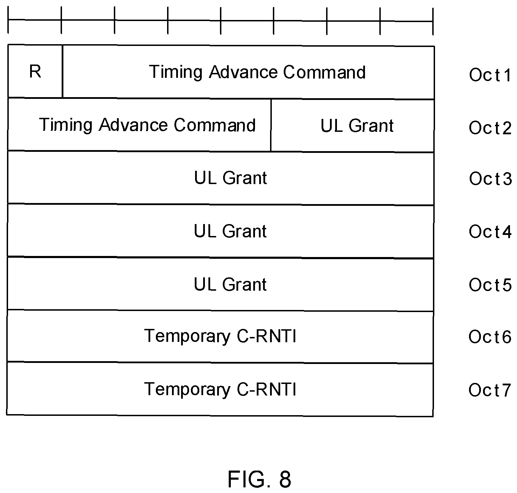

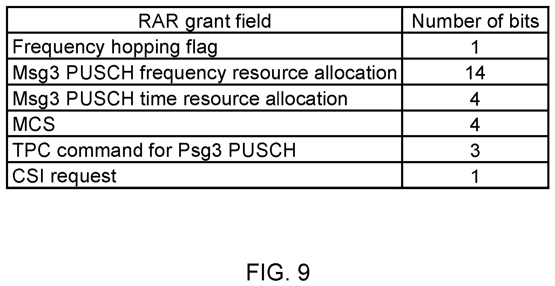

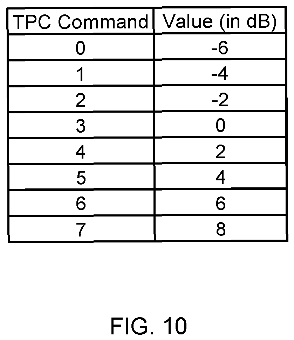

(3-1) A reserved bit (R) of the MAC sub-header/MAC payload for RAR may be released and may be used for the dynamic waveform switching. For example, "R" in a first octet (in other words, next to Timing Advance Command) of the MAC payload shown in FIG. 8 may indicate the dynamic waveform switching.
(3-2) The switching may be implicitly indicated based on an existing RAR grant field (UL Grant) shown in FIG. 9. For example, when a modulation and coding scheme (MCS) in the UL Grant indicates a specific MCS, enabling/disabling of transformPrecoder may be configured for the message 3/message A PUSCH. For example, when a value corresponding to a TPC command for message 3 PUSCH in the UL Grant (FIGS. 9 and 10) is a specific value or is greater/less than a specific threshold, enabling/disabling of transformPrecoder may be configured for the message 3/message A PUSCH.

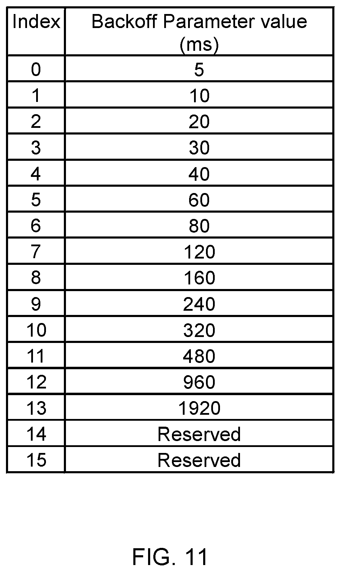

When a Backoff Parameter value (FIG. 11) corresponding to a Backoff Indicator (BI) field included in the MAC sub-header for RAR is a specific value or is greater/less than a specific threshold, enabling/disabling of transformPrecoder may be configured for the message 3/message A PUSCH. Alternatively, when an Extension (E) field, a Type (T) field, and a Random Access Preamble IDentifier (RAPID) field included in the MAC sub-header for RAR are specific values, enabling/disabling of transformPrecoder may be configured for the message 3/message A PUSCH.

The present embodiment may be applied when a specific condition is satisfied. The specific condition may be a case that a PRACH for triggering RAR is transmitted in a specific RA resource based on RACH resource partition configuration.

According to the present embodiment, it is possible to clarify processing when dynamic switching of a message 3/message A PUSCH waveform is applied. When RAR-based indication is used for dynamic waveform switching for a message 3/message A PUSCH, an existing MAC sub-header/payload can be used, and thus an increase in communication overhead can be suppressed.

### <Problem X4>

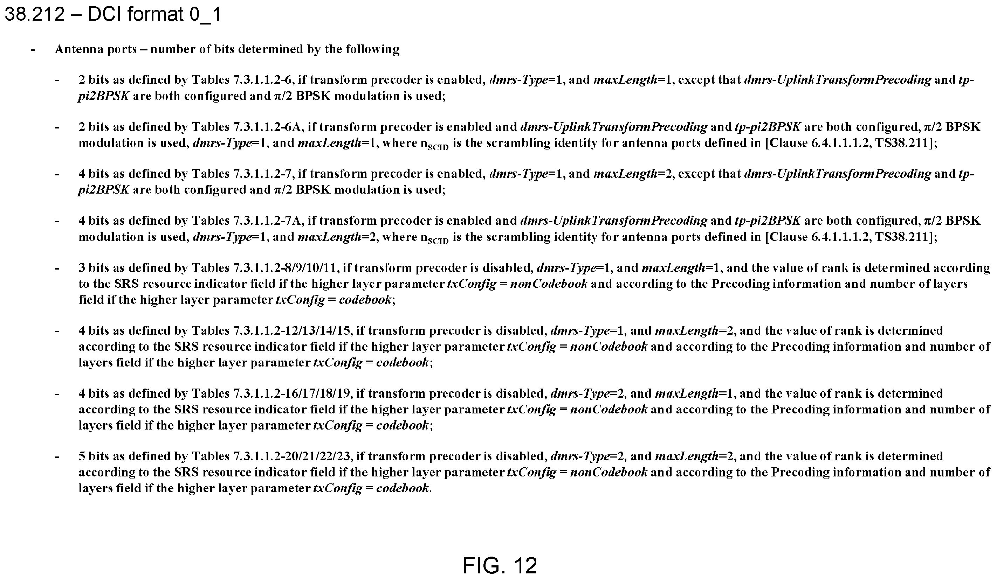

In an existing system (for example, Rel-17 NR or earlier versions), for an antenna port field included in DCI format 0_1/0_2, DMRS type 2 (for example, dmrs-Type = 2) is not assumed when a transform precoder is enabled (for example, when DFT-S-OFDM is applied to a scheduled PUSCH) (see FIG. 12). DMRS type 2 is considered/applied only when the transform precoder is disabled (for example, when CP-OFDM is applied to a scheduled PUSCH).

When dynamic waveform switching is supported, indication by DCI enables waveform switching between CP-OFDM and DFT-S-OFDM.

On the other hand, a PUSCH DMRS type (dmrs-Type 1 or dmrs-Type 2) is set by RRC. In this case, DMRS type 2 (or DMRS type 1) can be set for CP-OFDM (as in the existing system (for example, Rel-17 NR or earlier versions)).

Meanwhile, the existing system cannot set DMRS type 2 for DFT-S-OFDM, but setting/supporting dynamic waveform switching causes a case where DMRS type 2 is set for DFT-S-OFDM. This is because DCI indication (for example, waveform switching) is dynamically performed depending on RRC configuration change (DMRS type setting).

Thus, it remains unclear how setting of a PUSCH DMRS type is performed when dynamic waveform switching is supported.

### <Embodiment X6>

When dynamic waveform switching (DWS) is set, a specific DMRS type (dmrs-Type) may be applied/set for a PUSCH DMRS.

For example, when dynamic waveform switching is set, a UE may perform control so as to apply a specific DMRS type (for example, DMRS type 1) irrespective of a waveform (CP-OFDM or DFT-S-OFDM) indicated by DCI/a DMRS type set by RRC. With this, it is possible to suppress an increase in the number of combinations of {waveform, DMRS type} required to be assumed by the UE in PUSCH transmission. Consequently, it is possible to suppress an increase in the number of unavailable implementations in the UE.

For the DMRS type (dmrs-Type) of the PUSCH DMRS, the UE may assume/apply at least one of options 6-1 to 6-2 below. Note that, in the present disclosure, setting of dynamic waveform switching may be interpreted as enabling/activation of dynamic waveform in the middle of switching.

### {Option 6-1}

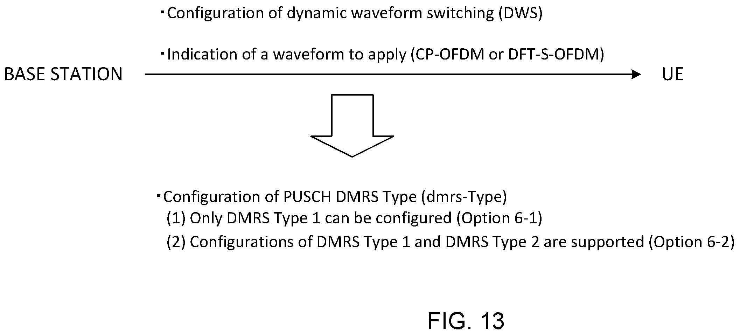

When the dynamic waveform switching is set, only type 1 may be set as the DMRS type (dmrs-Type) (see FIG. 13).

When setting the dynamic waveform switching, a base station may perform control so as to set, to the UE, only type 1 as the PUSCH DMRS type. In other words, when the dynamic waveform switching is set, setting of DMRS type 2 by RRC may be restricted/prohibited.

In this case, DMRS type 1 may be applied irrespective of a waveform (CP-OFDM or DFT-S-OFDM) indicated by the DCI. When the dynamic waveform switching is set, the UE may perform control so as to apply DMRS type 1 to any waveform (CP-OFDM and DFT-S-OFDM). When the dynamic waveform switching is set, the UE may assume/expect/judge that DMRS type 1 is set for the PUSCH DMRS.

When the dynamic waveform switching is set, setting of the PUSCH DMRS type by RRC may be omitted.

Only the specific DMRS type is set in this manner, which thereby can suppress an increase in the number of combinations of {waveform, DMRS type} required to be assumed by the UE in PUSCH transmission. Consequently, it is possible to suppress an increase in the number of unavailable implementations in the UE.

### {Option 6-2}

When the dynamic waveform switching is set, setting of DMRS type 1 or DMRS type 2 as the DMRS type may be supported/allowed (see FIG. 13).

When setting the dynamic waveform switching, the base station may perform control so as to set, to the UE, DMRS type 1 or DMRS type 2 as a PUSCH DMRS type. In other words, when the dynamic waveform switching is set, setting of DMRS type 2 by RRC may be allowed.

When DMRS type 2 is set, and the dynamic waveform switching is set, the UE may interpret type 1 as being set as a PUSCH DMRS type (for example, dmrs-Type). In other words, the UE may ignore the setting of DMRS type 2 and may apply DMRS type 1.

When the dynamic waveform switching is set in this manner, DMRS type 1 may be applied irrespective of a DMRS type set by RRC.

The DMRS type to be applied is set to the specific DMRS type in this manner, which thereby can suppress an increase in the number of combinations of {waveform, DMRS type} required to be assumed by the UE in PUSCH transmission. Consequently, it is possible to suppress an increase in the number of unavailable implementations in the UE.

### <Embodiment X7>

When dynamic waveform switching (DWS) is set, a DMRS type (dmrs-Type) to be applied based on a waveform indicated by DCI may be determined for a PUSCH DMRS.

For example, when the dynamic waveform switching is set, a UE may judge a DMRS type to be applied, based on a waveform (CP-OFDM or DFT-S-OFDM) indicated by DCI/a DMRS type set by RRC.

When the dynamic waveform switching is set, and the DCI indicates DFT-S-OFDM, the UE may assume/apply, for the DMRS type (dmrs-Type) of the PUSCH DMRS, at least one of options 7-1 to 7-2 below. The DCI used to indicate DFT-S-OFDM may be DCI used to schedule a PUSCH.

### {Option 7-1}

When the dynamic waveform switching is set, and the DCI indicates DFT-S-OFDM, only type 1 may be applied/set as the DMRS type.

When setting the dynamic waveform switching, a base station may perform control so as to set, to the UE, only type 1 as the PUSCH DMRS type. In other words, when the dynamic waveform switching is set, setting of DMRS type 2 by RRC may be restricted/prohibited.

In this case, DMRS type 1 may be applied irrespective of a waveform (CP-OFDM or DFT-S-OFDM) indicated by the DCI. When the dynamic waveform switching is set, the UE may perform control so as to apply DMRS type 1 to any waveform (CP-OFDM and DFT-S-OFDM). When the dynamic waveform switching is set, the UE may assume/expect/judge that DMRS type 1 is set for the PUSCH DMRS.

When the dynamic waveform switching is set, setting of the PUSCH DMRS type by RRC may be omitted.

Only the specific DMRS type is set in this manner, which thereby can suppress an increase in the number of combinations of {waveform, DMRS type} required to be assumed by the UE in PUSCH transmission. Consequently, it is possible to suppress an increase in the number of unavailable implementations in the UE.

### {Option 7-2}

When the dynamic waveform switching is set, and the DCI indicates DFT-S-OFDM, setting of DMRS type 1 or DMRS type 2 as the DMRS type may be supported/allowed.

When setting the dynamic waveform switching, the base station may perform control so as to set, to the UE, DMRS type 1 or DMRS type 2 as a PUSCH DMRS type. In other words, when the dynamic waveform switching is set, setting of DMRS type 2 by RRC may be allowed.

When DMRS type 2 is set, the dynamic waveform switching is set, and the DCI indicates DFT-S-OFDM, the UE may interpret type 1 as being set as a PUSCH DMRS type (for example, dmrs-Type). In other words, the UE may, when the DCI indicates DFT-S-OFDM, ignore the setting of DMRS type 2 and apply DMRS type 1.

On the other hand, when DMRS type 2 is set, the dynamic waveform switching is set, and the DCI does not indicate DFT-S-OFDM (for example, when CP-OFDM is indicated), the UE may interpret type 2 as being set as a PUSCH DMRS type (for example, dmrs-Type). In other words, the UE may, when the DCI does not indicate DFT-S-OFDM (for example, when CP-OFDM is indicated), apply DMRS type 2.

When the dynamic waveform switching is set and DMRS type 2 is set by RRC in this manner, the presence or absence of application of DMRS type 2 may be judged based on a waveform indicated by the DCI. Note that, when the dynamic waveform switching is set and DMRS type 1 is set by RRC, DMRS type 1 may be controlled to be applied irrespective of a waveform indicated by the DCI.

With this, it is possible to apply DMRS type 2 when the DCI indicates CP-OFDM, and thus a DMRS type to be applied depending on a waveform can be flexibly controlled.

### <Embodiment X8>

When dynamic waveform switching (DWS) is set, and DMRS type 2 is set as a DMRS type (for example, dmrs-Type), a given field (for example, an antenna port field) included in DCI may be understood based on a given rule.

When dynamic waveform switching is set, and DMRS type 2 is set, a UE may interpret a given field (for example, an antenna port field) included in DCI, based on a given rule. The DCI may be DCI used to schedule a PUSCH. As the given rule, at least one of options 8-1 to 8-2 below may be applied, for example.

### {Option 8-1}

A bit width (for example, bitwidth) of the antenna port field is determined in consideration of dmrs-Type being DMRS type 2 (in other words, in accordance with setting of dmrs-Type), but the UE may interpret indication based on the antenna port field by interpreting only part of the bits (or by using some of the bits).

The number of some of the bits may be the same as the number of antenna port fields (or the number of bits/number of codepoints) for which type 2 is set for dmrs-Type 1. In the present disclosure, part of the bits/some of the bits may be interpreted as part of the DCI codepoints/some of the DCI codepoints.

In this case, the determination of the bit width of the antenna port field of the DCI and the interpretation of the antenna port field may be different. In other words, the bit width/number of codepoints of the antenna port field of the DCI may be determined based on DMRS type 2, and interpretation of the antenna port field of the DCI may be performed by assuming DMRS type 1.

The number of parts of the DCI codepoints may be the same as the number of antenna port fields (or the number of bits/number of codepoints) for which type 2 is set for dmrs-Type 1.

With this, in a case where DMRS type 2 is set, a UE can, even when applying DMRS type 1, appropriately perform interpretation of an antenna port field of DCI.

### {Option 8-2}

A bit width (for example, bitwidth) of the antenna port field is determined in consideration of dmrs-Type being DMRS type 1 (in other words, setting of dmrs-Type is ignored), and the UE may interpret indication based on the antenna port field by considering that dmrs-Type is DMRS type 1.

In this case, the determination of the bit width of the antenna port field of the DCI and the interpretation of the antenna port field may be the same. In other words, the bit width of the antenna port field of the DCI may be determined based on DMRS type 1, and interpretation of the antenna port field of the DCI may also be performed by assuming DMRS type 1.

With this, in a case where DMRS type 2 is set, it is possible to perform both a bit width and interpretation of an antenna port field by assuming DMRS type 1. An increase in overhead for an antenna port field can be suppressed.

### <Embodiment X9>

When dynamic waveform switching (DWS) is set, DMRS type 2 is set as a DMRS type (for example, dmrs-Type), and DCI indicates DFT-S-OFDM, a given field (for example, an antenna port field) included in the DCI may be understood based on a given rule.

When dynamic waveform switching is set, DMRS type 2 is set, and DCI indicates DFT-S-OFDM, a UE may interpret a given field (for example, an antenna port field) included in the DCI, based on a given rule. The DCI may be DCI used to schedule a PUSCH. As the given rule, at least one of options 9-1 to 9-2 below may be applied, for example.

### {Option 9-1}

A bit width (for example, bitwidth) of the antenna port field is determined in consideration of dmrs-Type being DMRS type 2 (in other words, in accordance with setting of dmrs-Type), but the UE may interpret indication based on the antenna port field by interpreting only part of the bits (or by using some of the bits).

The number of some of the bits may be the same as the number of antenna port fields (or the number of bits/number of codepoints) for which type 2 is set for dmrs-Type 1. In the present disclosure, part of the bits/some of the bits may be interpreted as part of the DCI codepoints/some of the DCI codepoints.

In this case, the determination of the bit width of the antenna port field of the DCI and the interpretation of the antenna port field may be different. In other words, the bit width of the antenna port field of the DCI may be determined based on DMRS type 2, and interpretation of the antenna port field of the DCI may be performed by assuming DMRS type 1.

The number of parts of the DCI codepoints may be the same as the number of antenna port fields (or the number of bits/number of codepoints) for which type 2 is set for dmrs-Type 1.

With this, in a case where DMRS type 2 is set and DCI indicates DFT-S-OFDM, a UE can, even when applying DMRS type 1, appropriately perform interpretation of an antenna port field of the DCI.

Note that, in a case where DMRS type 2 is set and DCI indicates CP-OFDM, determination of a bit width of an antenna port field of the DCI and interpretation of the antenna port field may be performed based on DMRS type 2.

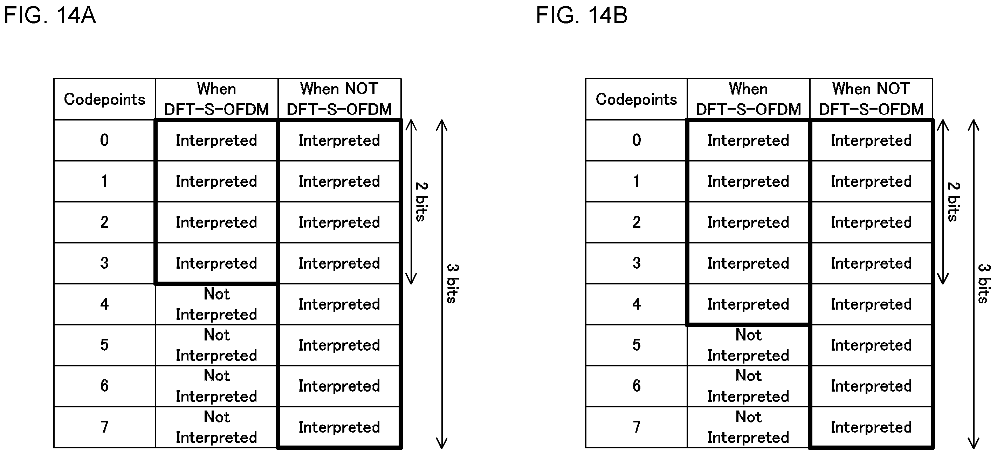

FIGS. 14A and 14B show examples of the antenna port field of the DCI when dynamic waveform switching is set and type 2 is set as a DMRS type (for example, dmrs-Type).

### <<Example 1 of Antenna Port Field>>

When the DCI for scheduling a PUSCH indicates DFT-S-OFDM, the bit width (or the number of bits of the field) may be set to 3 bits. In this case, the UE may interpret the field in a manner similar to that in a case where DMRS type 1 is set as a DMRS type (for example, dmrs-Type). For example, the UE may interpret only the least significant bit (LSB) of 2 bits (see FIG. 14A).

When the DCI for scheduling a PUSCH does not indicate DFT-S-OFDM (for example, CP-OFDM is indicated), the bit width (or the number of bits of the field) may be set to 3 bits. In this case, the UE may interpret the field in a manner similar to that in a case where DMRS type 2 is set as a DMRS type (for example, dmrs-Type). For example, the UE may perform the interpretation by using all of the 3 bits.

### <<Example 2 of Antenna Port Field>>

When the DCI for scheduling a PUSCH indicates DFT-S-OFDM, the bit width (or the number of bits of the field) may be set to 3 bits. In this case, the UE may interpret the field by using a given number of (here, five) codepoints from among eight codepoints generated by the 3 bits. In this case, the remaining three codepoints/fields may be reserved bits/reserved codepoints (see FIG. 14B).

When the DCI for scheduling a PUSCH does not indicate DFT-S-OFDM (for example, CP-OFDM is indicated), the bit width (or the number of bits of the field) may be set to 3 bits. In this case, the UE may interpret the field by using all (here, eight) codepoints generated by the 3 bits.

In this manner, when dynamic waveform switching is set, determination/interpretation of a bit width of an antenna port field of DCI is flexibly controlled based on a waveform indicated by the DCI, thereby enabling PUSCH DMRS transmission to be appropriately performed.

### {Option 9-2}

A bit width (for example, bitwidth) of the antenna port field is determined in consideration of dmrs-Type being DMRS type 1 (in other words, setting of dmrs-Type is ignored), and the UE may interpret indication based on the antenna port field by considering that dmrs-Type is type 1.

In this case, the determination of the bit width of the antenna port field of the DCI and the interpretation of the antenna port field may be the same. In other words, the bit width of the antenna port field of the DCI may be determined based on DMRS type 1, and interpretation of the antenna port field of the DCI may also be performed by assuming DMRS type 1.

With this, in a case where DMRS type 2 is set and DCI indicates DFT-S-OFDM (for example, DMRS type 1 is applied), it is possible to perform both a bit width and interpretation of an antenna port field by assuming DMRS type 1. An increase in overhead for an antenna port field can be suppressed.

### <Analysis A1>

It is studied that DWS is not supported for a type 1 and type 2 configured grant (CG) PUSCH and is supported for only a dynamic grant (DG).

The UE does not expect that a bit width of a given field in DCI format 0_1 with a CRC scrambled by a CS-RNTI is greater than a corresponding bit width of the same field in DCI format 0_1 with a CRC scrambled by a C-RNTI for the same serving cell. When the bit width of the given field in DCI format 0_1 with a CRC scrambled by a CS-RNTI is not equal to the bit width of the corresponding field in DCI format 0_1 with a CRC scrambled by a C-RNTI for the same serving cell, some most significant bits (MSBs) with values set to '0' are inserted into the field in DCI format 0_1 with a CRC scrambled by a CS-RNTI until the bit width becomes equal to the bit width of the corresponding field in DCI format 0_1 with a CRC scrambled by a C-RNTI for the same serving cell.

In the size alignment for DCI format 0_1 with a CRC scrambled by a C-RNTI or a CS-RNTI, the following restrictions are satisfied:
- A bit width (size) of any field in DCI format 0_1 (using a C-RNTI) with a CRC scrambled by a C-RNTI is greater than or equal to a bit width of the field in DCI format 0_1 (using a CS-RNTI) with a CRC scrambled by a CS-RNTI. If the bit width of the field in DCI format 0_1 using a CS-RNTI is smaller than the bit width of the field in DCI format 0_1 using a C-RNTI, 0 is inserted into the field in DCI format 0_1 using a CS-RNTI, thereby causing the bit width of the field in DCI format 0_1 using a CS-RNTI to be equal to the bit width of the field in DCI format 0_1 using a C-RNTI.

There are separate respective DMRS configurations for a DG-PUSCH and a CG-PUSCH. A PUSCH configuration (DG-PUSCH, PUSCH-Config) may include an uplink DMRS configuration (DMRS-UplinkConfig) for dmrs-UplinkForPUSCH-MappingTypeA/dmrs-UplinkForPUSCH-MappingTypeB. A CG-PUSCH configuration (ConfiguredGranConfig) may include an uplink DMRS configuration (DMRS-UplinkConfig) for cg-DMRS-Configuration.

The DMRS configurations affect DCI field sizes. The size of an antenna port field when DMRS type 2 is set is one bit greater than the size of the antenna port field when DMRS type 1 is set. For example, the size of the antenna port field is 3 bits when a transform precoder is disabled, a DMRS type is 1, and a maximum DMRS length is 1, and the size of the antenna port field is 4 bits when a transform precoder is disabled, a DMRS type is 1, and a maximum DMRS length is 2. On the other hand, the size of the antenna port field is 4 bits when a transform precoder is disabled, a DMRS type is 2, and a maximum DMRS length is 1, and the size of the antenna port field is 5 bits when a transform precoder is disabled, a DMRS type is 2, and a maximum DMRS length is 2.

### <Problem A1>

In Rel. 17, simultaneous configuration of DFT-s-OFDM and DMRS type 2 is not supported for a PUSCH.

If DWS is set for a DG-PUSCH, scheduling DCI delivers a new 1 bit for indicating waveform switching. The problem of configurability of DMRS type 2 is handled in Problem 1 and Embodiment X1.

DWS is not supported for a type 2 CG-PUSCH.

Type 2 CG activation DCI (type 2 CG-PUSCH activation DCI) and DG-DCI (DG-PUSCH scheduling DCI) share the same DCI format having the same size. The size of any field in the DG-DCI is greater than or equal to the size of the field in the type 2 CG-PUSCH activation DCI.

As DMRS configuration for type 2 CG-PUSCH when DWS for DG-PUSCH is set, some cases below are considered:
- Case 1: If DWS is set and DMRS type 1 is set, whether there is a restriction on a DMRS type for CG-PUSCH poses a problem.
- Case 2: If DWS is set and DMRS type 2 is set, whether there is a restriction on a DMRS type for CG-PUSCH poses a problem.

### <Embodiment A1>

This embodiment relates to problem A1.

When DWS is set, DMRS type 1 may be set for both a DG-PUSCH and a CG-PUSCH. According to this setting, complex UE operation is not required for interpretation of a DMRS type and determination of a DCI size for DG and CG activation.

- Example 1: The following operation may be defined in a specification.

When dynamic waveform switching is set, a UE expects that dmrs-Type = 1 are set in both PUSCH-Config and ConfiguredGrantConfig (on the same serving cell/BWP).

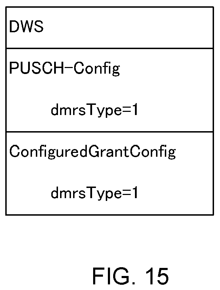

FIG. 15 shows an example of an RRC IE according to Embodiment A1. In this example, the UE receives a DWS configuration, dmrs-Type = 1 in PUSCH-Config, and dmrs-Type = 1 in ConfiguredGrantConfig.

- Example 2: The following operation may be defined in a specification.

When dynamic waveform switching is set, the UE does not expect that dmrs-Type = 2 is set in either PUSCH-Config or ConfiguredGrantConfig (on the same serving cell/BWP).

### <Embodiment A2>

This embodiment relates to problem A1.

If DWS is set, DMRS type 1 or 2 and DMRS type 1 may be set for a DG-PUSCH and a CG-PUSCH, respectively. According to this setting, a UE does not need to read a DWS bit to recognize the size of type 2 CG-PUSCH activation DCI. Flexible DMRS configuration can be performed for a DG-PUSCH.

- Example 1: The following operation may be defined in a specification.

When dynamic waveform switching is set, the UE expects that dmrs-Type = 1 is set in ConfiguredGrantConfig (on the same serving cell/BWP).

- Example 2: The following operation may be defined in a specification.

When dynamic waveform switching is set, the UE does not expect that dmrs-Type = 2 is set in ConfiguredGrantConfig (on the same serving cell/BWP).

### <Embodiment A3>

This embodiment relates to problem A1.

When DWS is set, DMRS type 1 or 2 may be set for a DG-PUSCH and a CG-PUSCH. According to this setting, flexible DMRS configuration can be performed for both a DG-PUSCH and a CG-PUSCH.

### - Embodiment A3-1

When a DWS field indicates DFT-s-OFDM, and DMRS type 2 is set for a DG-PUSCH, a UE may interpret a DMRS configuration as DMRS type 1. According to this operation, the UE can follow existing implementation for DMRS. In other words, DMRS type 2 may be set for only CP-OFDM. This operation may follow Embodiment X7.

### - Embodiment A3-2

When a DWS field in DCI for activating/deactivating a type 2 CG-PUSCH indicates DFT-s-OFDM, and DMRS type 2 is set for a CG-PUSCH, a UE may interpret a DMRS configuration as DMRS type 1. According to this operation, it is possible to obtain flexibility of DMRS configuration while maintaining the same DCI size for DG and CG-PUSCH activation.

When a DWS indicator in the DCI for activating/deactivating a type 2 CG-PUSCH indicates transform precoding, the UE may interpret dmrs-Type in ConfiguredGrantConfig as being equal to 1.

The following operation may be defined.
-- The UE does not expect that the DWS indicator in the type 2 CG-PUSCH activation/deactivation DCI indicates that transform precoding is enabled.

### <Problem A2>

As described above, the specification does not consider a DCI field that has a non-zero bit width in DCI with a CRC scrambled by a CS-RNTI and that has a zero bit width in DCI with a CRC scrambled by a C-RNTI.

There is a possibility that, in a future specification, a new DCI field with the following characteristics is defined.
- The bit width is zero when a transform precoder is disabled, and
- the bit width is non-zero when a transform precoder is enabled.

The following conditions are error cases, which may be explicitly avoided.
- The new DCI field is configured for both a DG-PUSCH and a CG-PUSCH,
- a transform precoder is disabled for the DG-PUSCH, and
- a transform precoder is enabled for the CG-PUSCH.

### <Problem A3>

In addition to problem A2, there is a possibility that a DCI field size differs based on DWS indication. There is a possibility that the error cases of problem A2 occur depending on a DWS indicator.

### <Embodiment A4>

This embodiment relates to problem A2.

In the present disclosure, a DCI field present in only PUSCH scheduling with DFT-s-OFDM, a DCI field that is 0 bits when a transform precoder is disabled and, otherwise, is X (X > 0) bits, a DCI field that has a non-zero bit width for DFT-s-OFDM and has a zero bit width for CP-OFDM, a new DCI field, and a specific DCI field may be interchangeably interpreted.

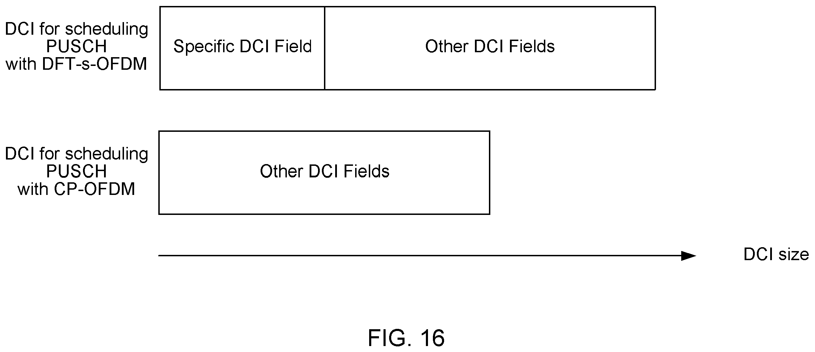

In an example of FIG. 16, DCI for PUSCH scheduling with DFT-s-OFDM includes the specific DCI field, and DCI for PUSCH scheduling with CP-OFDM does not include the specific DCI field.

When a DCI field present in only PUSCH scheduling with DFT-s-OFDM is configured, configuration of a transform precoder for a DG-PUSCH and configuration of a transform precoder for a CG-PUSCH may be the same. According to this configuration, the size of the field is the same for the DG-PUSCH and the CG-PUSCH, and thus no additional DCI size alignment rule is required.

### <Embodiment A5>

This embodiment relates to problem A2.

When a DCI field present in only PUSCH scheduling with DFT-s-OFDM is configured, a transform precoder for a CG-PUSCH may be disabled. According to this configuration, the size of the field is the same for the DG-PUSCH and the CG-PUSCH, and thus no additional DCI size alignment rule is required.

### <Embodiment A6>

This embodiment relates to problem A2.

When a DCI field present in only PUSCH scheduling with DFT-s-OFDM is configured, the field may be absent in DCI with a CRC scrambled by a CS-RNTI. According to this configuration, the size of the field is the same for the DG-PUSCH and the CG-PUSCH, and thus no additional DCI size alignment rule is required.

### <Embodiment A7>

This embodiment relates to problem A2.

When a DCI field present in only PUSCH scheduling with DFT-s-OFDM is configured, a transform precoder for a DG-PUSCH is disabled, and a transform precoder for a CG-PUSCH is enabled, a bit width of the field may be matched for the DG-PUSCH and the CG-PUSCH, based on a specific rule.

The specific rule may follow at least one of some rules below.
- The size of the field is matched to the larger of a size for the DG-PUSCH and a size for the CG-PUSCH. For example, a bit with a value of '0' may be inserted into the MSB of the field having a smaller size.
- The size of the field is matched to the smaller of a size for the DG-PUSCH and a size for the CG-PUSCH. For example, by narrowing a range of codepoints corresponding to the larger size, reducing a maximum value of the codepoints, increasing a minimum value of the codepoints, or thinning the codepoints, the number of the codepoints may be reduced to less than or equal to the number of codepoints of the field having the smaller size. For example, in a manner similar to that of Embodiment X9 (option 9-1), the number of codepoints corresponding to the larger size may be reduced.
- The size of the field is matched to a size of the field in DCI with a CRC scrambled by a C-RNTI (scheduling DCI for DG-PUSCH).
- The size of the field is matched to a size of the field in DCI with a CRC scrambled by a CS-RNTI (activation/deactivation DCI for CG-PUSCH).

According to this operation, flexible configuration of a transform precoder and a DCI field for a DG-PUSCH and a CG-PUSCH can be achieved.

### <Embodiment A8>

This embodiment relates to problem A3.

A DCI field present in only PUSCH scheduling with DFT-s-OFDM and DWS may not be configured simultaneously.

The following operation may be defined in a specification.
- A UE does not expect that a DCI field present in only PUSCH scheduling with DFT-s-OFDM and DWS are configured simultaneously.

According to this configuration, a DCI size alignment rule is simplified.

### <Embodiment A9>

This embodiment relates to problem A3.

When a DCI field present in only PUSCH scheduling with DFT-s-OFDM and DWS are configured simultaneously, a transform precoder may be configured as disabled for a CG-PUSCH.

According to this configuration, a DCI size alignment rule is simplified.

### <Embodiment A10>

This embodiment relates to problem A3.

When a DCI field present in only PUSCH scheduling with DFT-s-OFDM and DWS are configured simultaneously, at least one of some restrictions below may be applied.

- A DWS indicator may indicate only CP-OFDM. The DWS indicator may not indicate DFT-s-OFDM. The following operation may be defined in a specification.
   -- A UE does not expect that the DWS indicator indicates that a transform precoder is enabled.
- The DWS indicator may indicate the same waveform as a waveform configured for a CG-PUSCH. The DWS indicator may not indicate a waveform different from the waveform configured for the CG-PUSCH. The following operation may be defined in a specification.

-- The UE does not expect that indication of the DWS indicator is different from a transform precoder configuration in a configured grant configuration.

According to this configuration, a DCI size alignment rule is simplified.

### <Embodiment A11>

This embodiment relates to problem A3.

When a DCI field present in only PUSCH scheduling with DFT-s-OFDM and DWS are configured simultaneously, a bit width of the field may be matched for a DG-PUSCH and a CG-PUSCH, based on a specific rule.

The specific rule may follow at least one of some rules below.
- The size of the field is matched to the larger of a size for the DG-PUSCH and a size for the CG-PUSCH. For example, a bit with a value of '0' may be inserted into the MSB of the field having a smaller size.
- The size of the field is matched to the smaller of a size for the DG-PUSCH and a size for the CG-PUSCH. For example, by narrowing a range of codepoints corresponding to the larger size, reducing a maximum value of the codepoints, increasing a minimum value of the codepoints, or thinning the codepoints, the number of the codepoints may be reduced to less than or equal to the number of codepoints of the field having the smaller size. For example, in a manner similar to that of Embodiment X9 (option 9-1), the number of codepoints corresponding to the larger size may be reduced.
- The size of the field is matched to a size of the field in DCI with a CRC scrambled by a C-RNTI (scheduling DCI for DG-PUSCH).
- The size of the field is matched to a size of the field in DCI with a CRC scrambled by a CS-RNTI (activation/deactivation DCI for CG-PUSCH).

According to this operation, flexible configuration/indication of a transform precoder and a DCI field for a DG-PUSCH and a CG-PUSCH can be achieved.

### <Multi-Carrier DCI>

For Rel. 18, it is studied to support a new DCI format for scheduling a plurality of PDSCHs over a plurality of CCs or a plurality of PUSCHs over a plurality of CCs.

The DCI format may be at least one of some DCI formats below.
- DCI format 0_X for scheduling a plurality of PUSCHs over a plurality of CCs
- DCI format 1_X for scheduling a plurality of PDSCHs over a plurality of CCs

Each DCI field in DCI format 0_X/1_X may be categorized as at least one of some types below.

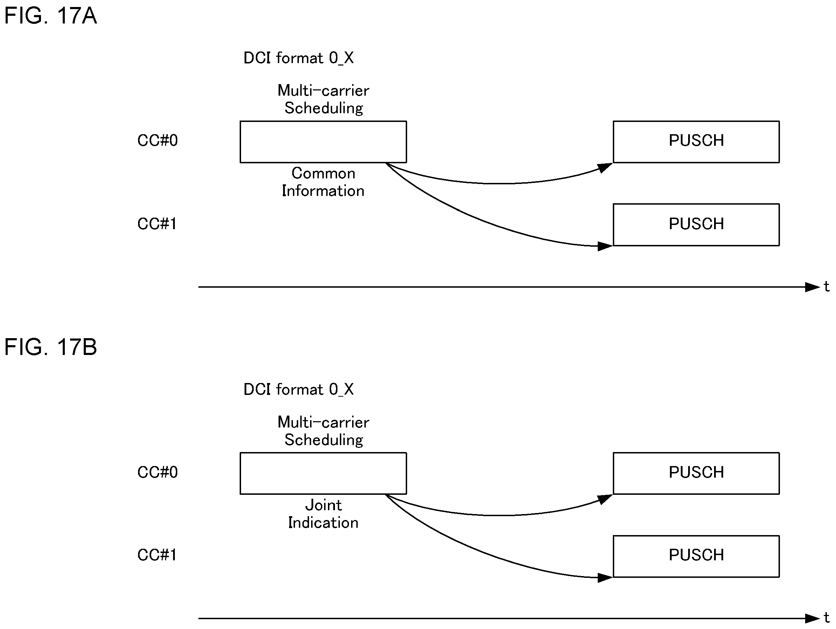

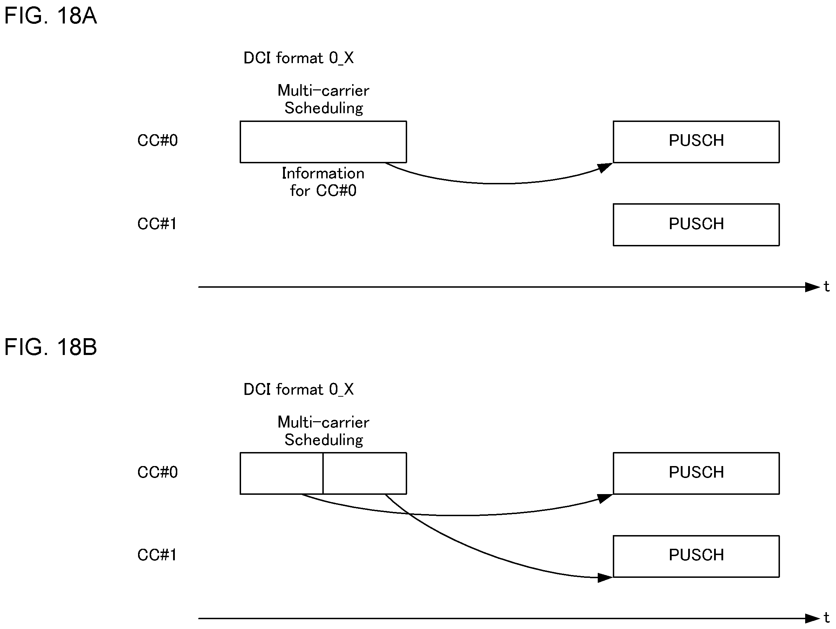

- Type 1
   -- Type 1A: A single field in one DCI format It indicates common information for all of a plurality of CCs (all of a plurality of co-scheduled CCs). FIG. 17A shows an example of DCI format 0_X of type 1A for scheduling a PUSCH. DCI format 1_X of type 1A for scheduling a PDSCH may also be similar to this example.
   -- Type 1B: A single field in one DCI format It indicates different pieces of information for different CCs (indicates separate information for each of a plurality of co-scheduled CCs) via joint indication. FIG. 17B shows an example of DCI format 0_X of type 1B for scheduling a PUSCH. DCI format 1_X of type 1B for scheduling a PDSCH may also be similar to this example.
   -- Type 1C: A single field in one DCI format It indicates information for only one of a plurality of co-scheduled CCs. FIG. 18A shows an example of DCI format 0_X of type 1C for scheduling a PUSCH. DCI format 1_X of type 1C for scheduling a PDSCH may also be similar to this example.
- Type 2: A plurality of fields in one DCI format Each of the plurality of fields (separate field) independently indicates information for each CC. FIG. 18B shows an example of DCI format 0_X of type 2 for scheduling a PUSCH. DCI format 1_X of type 2 for scheduling a PDSCH may also be similar to this example.
- Type 3: Any one of a field common to a plurality of co-scheduled CCs, a field dedicated to each of a plurality of co-scheduled CCs, or a field dedicated to each subgroup, depending on explicit configuration. For example, either type 1A or type 2 may be set. One subgroup includes a subset of a plurality of co-scheduled cells. Here, the single field is commonly applied to co-scheduled cells belonging to the same subgroup.

### <Analysis B1>

Some problems below are considered.
- Q1: Whether DWS indicated in DCI format 0_X is supported.
- Q2: When DWS indicated in DCI format 0_X is supported, how many bits are indicated for the purpose of the DWS in DCI format 0_X.
- Q3: When DWS indicated in DCI format 0_X is supported, how RRC configuration affected by an exact waveform is handled. The RRC configuration is, for example, a transform precoder, a maximum rank, an FDRA type, a DMRS type, or the like.

Primarily in DCI size alignment for DCI format 0_1, an antenna port, a TPMI, DMRS-PTRS association, DMRS sequence initialization, and a frequency hopping flag and a DMRS type may follow at least one of Embodiments X0 to X6 and at least one of Embodiments X7 to X9, respectively.

### <Embodiment B0>

DWS may be supported or set for DCI format 0_X. According to this embodiment, a waveform for a PUSCH scheduled by DCI format 0_X can be dynamically selected depending on a condition. The DWS for DCI format 0_X may follow at least one of some options below.

### - Option 1: Configuration approach

Setting of the DWS for DCI format 0_X may follow at least one of some options below.
-- Option 1-1: New dedicated RRC parameter for DCI format 0_X According to this parameter, independent configuration of ON/OFF of the DWS can be performed for each DCI format.
-- Option 1-2: Reuse/reapplication of an RRC parameter for another usage. According to this parameter, no additional signaling is required. For example, the RRC parameter for another usage may configure ON/OFF of DWS for at least one of DCI formats 0_1 and 0_2.

### - Option 2

The number of bits for indicating the DWS may follow at least one of some options below.
-- Option 2-1: 1 bit
-- Option 2-2: N bits Here, N may be the number of co-scheduled cells. One-to-one mapping between the bits and the cells may be applied.
-- Option 2-3: N1 bits Here, 1 < N1 < N may be applied.
--- For example, N1 may be the number of co-scheduled cells configured with the DWS.
--- For example, N1 may be a maximum number of cells co-scheduled from a cell combination. In this case, a plurality of combinations of cells may be configured by an RRC parameter.
--- For example, N1 may be a maximum number of cells co-scheduled with setting of the DWS from a cell combination. In this case, a plurality of combinations of cells may be configured by an RRC parameter.

### <Embodiment B1>

When DWS in DCI format 0_X is set, RRC configuration for a transform precoder (transformPrecoder) may follow at least one of some embodiments below.

### - Embodiment 1-1

The configuration is "disabled" for any of co-scheduled cells. According to this configuration, interpretation of 1-bit DWS in DCI format 0_X is simplified.

### - Embodiment 1-2

The configuration is the same over all the co-scheduled cells. The configuration may be either "disabled" or "enabled." According to this configuration, interpretation of 1-bit DWS in DCI format 0_X is simplified, and both CP-OFDM and DFT-s-OFDM can be used.

### - Embodiment 1-3

The configuration differs for different cells included in the co-scheduled cells. According to this configuration, configurability of a Rel-17 waveform for each cell is maintained.

According to this embodiment, even when DWS in DCI format 0_X is set, a transform precoder can be appropriately configured.

### <Embodiment B2>

When DWS in DCI format 0_X is set, RRC configuration for a maximum rank (maxRank) may follow at least one of some embodiments below.

### - Embodiment 2-1

The configuration is the same over all the co-scheduled cells.

### - Embodiment 2-1a

The configuration is '1' over all the co-scheduled cells.

### - Embodiment 2-2

The configuration differs over the co-scheduled cells.

According to this embodiment, even when DWS in DCI format 0_X is set, a maximum rank can be appropriately configured.

### <Embodiment B3>

When DWS in DCI format 0_X is set, RRC configuration for an FDRA type (resourceAllocation) may follow at least one of some embodiments below.

### - Embodiment 3-1

The configuration is the same over all co-scheduled cells.

### - Embodiment 3-1a

The configuration is FDRA type 1 ('resourceAllocationType1') over all the co-scheduled cells.

### - Embodiment 3-1b

The configuration is dynamic switching ('dynamicSwitching') over all the co-scheduled cells.

### - Embodiment 3-1c

The configuration is a type other than FDRA type 0 ('resourceAllocationType0') over all the co-scheduled cells.

### - Embodiment 3-2

The configuration differs over all the co-scheduled cells.

### - Embodiment 3-3

The configuration differs over all the co-scheduled cells, and is a type other than 'resourceAllocationType0.'

According to this embodiment, even when DWS in DCI format 0_X is set, an FDRA type can be appropriately configured. There is no need to support simultaneous configuration of DFT-s-OFDM and FDRA type 0.

### <Embodiment B4>

When DWS in DCI format 0_X is set, RRC configuration for a DMRS type (dmrs-Type) may follow at least one of some embodiments below.

### - Embodiment 4-1

The configuration is the same over all co-scheduled cells.

### - Embodiment 4-1a

The configuration is not configured for any of the co-scheduled cells. This may imply that DMRS type 1 is set for any of the co-scheduled cells.

### - Embodiment 4-1b

The configuration is not type 2 ('type2') for any of the co-scheduled cells.

### - Embodiment 4-2

The configuration differs for all the co-scheduled cells.

According to this embodiment, even when DWS in DCI format 0_X is set, a DMRS type can be appropriately set.

### <Analysis B2>

How to achieve DCI size alignment for DCI format 0_X including a DWS field poses a problem. The DCI size alignment may depend on at least one of some policies below. The DCI field requiring consideration of the alignment may be an antenna port, a TPMI, PTRS-DMRS association, DMRS sequence initialization, or a frequency hopping flag.

The details of the DWS field in DCI format 0_X may follow at least one of some policies below.
- Policy 1: The DWS field in DCI format 0_X is 1 bit. This DWS field may be type 1A.
- Policy 2: The DWS field in DCI format 0_X is N (> 1) bits. This DWS field may be type 2.
- Policy 3: The DWS field in DCI format 0_X is configurable for policies 1 and 2. The DWS field in this case may be type 3.
- Another Policy: The DWS field in DCI format 0_X may be type 1B/1C.

Embodiments B0 to B4 may be applied without depending on policies 1 to 3.

Embodiments B5 to B7 may be based on policy 1.

Embodiments B8 to B10 may be based on policy 2.

### <Embodiment B5>

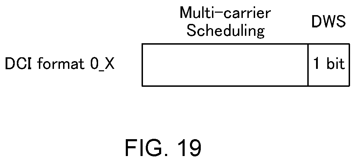

When a 1-bit DWS field is configured for DCI format 0_X (FIG. 19), interpretation of the 1-bit indication may follow at least one of some embodiments below.

### - Embodiment 5-1

For any of co-scheduled cells, '0' and '1' indicate CP-OFDM (transform precoder is disabled) and DFT-s-OFDM (transform precoder is enabled), respectively. According to this interpretation, complex combinations of waveforms can be avoided over co-scheduled cells.

### - Embodiment 5-2

For any of co-scheduled cells, '0' and '1' indicate a waveform configured in an RRC parameter and waveform switching from the waveform configured in the RRC parameter, respectively. According to this interpretation, it is possible to switch a waveform by using only 1 bit for all co-scheduled cells. This case can be considered together with Embodiment B1. For example, in Embodiment 1-1, a transform precoder is restricted to be disabled, thereby enabling complex waveform indication to be avoided.

### - Embodiment 5-3

For any of co-scheduled cells, '0' and '1' indicate a waveform configured in an RRC parameter for one of the co-scheduled cells and waveform switching from the waveform configured in the RRC parameter for one of the co-scheduled cells, respectively. According to this interpretation, complex combinations of waveforms can be avoided over co-scheduled cells.

Embodiment 5-1/5-2/5-3 may be applied only to co-scheduled cells for which DWS setting is valid.

In Embodiment 5-1/5-2/5-3, the interpretations of '0' and '1' may be reversed.

In Embodiment 5-3, one of the co-scheduled cells may be one or combinations of two or more of some definitions below.
- A cell to be scheduled
- A reference cell for counting of sizes of blind decoding (BD)/control channel element (CCE)/DCI
- A cell configured with a search space (SS) set for DCI format 0_X
- A cell with the smallest or largest serving cell index
- A cell indicated by DCI
- A cell configured by an RRC IE
- A cell indicated by a MAC CE
- A cell configured with DWS

The combination of two or more definitions may be, for example, a cell with the smallest serving cell index, among co-scheduled cells configured with DWS.

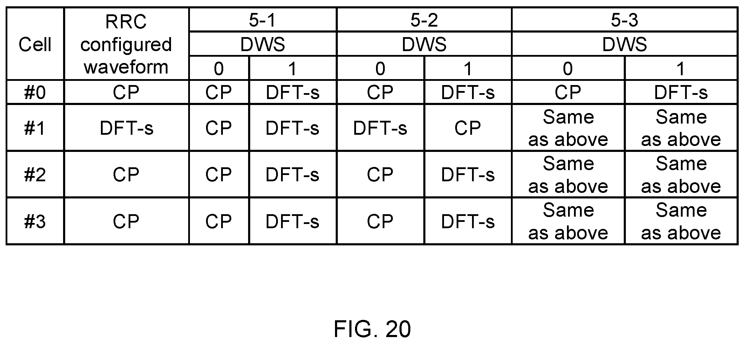

In an example of FIG. 20, RRC configured waveforms for cell indices #0, #1, #2, and #3 are CP-OFDM (CP), DFT-s-OFDM (DFT-s), CP-OFDM (CP), and CP-OFDM (CP), respectively.

In Embodiment 5-1, when a value of the DWS field is 0, CP-OFDM is used for all (PUSCHs) of cell indices #0, #1, #2, and #3, and when a value of the DWS field is 1, DFT-s-OFDM is used for all (PUSCHs) of cell indices #0, #1, #2, and #3.

In Embodiment 5-2, when a value of the DWS field is 0, CP-OFDM, DFT-s-OFDM, CP-OFDM, and CP-OFDM are used for (PUSCHs) with cell indices #0, #1, #2, and #3, respectively, and when a value of the DWS field is 1, DFT-s-OFDM, CP-OFDM, DFT-s-OFDM, and DFT-s-OFDM are used for (PUSCHs) with cell indices #0, #1, #2, and #3, respectively.

In Embodiment 5-3, when a value of the DWS field is 0, CP-OFDM is used for all (PUSCHs) of cell indices #0, #1, #2, and #3, and when a value of the DWS field is 1, DFT-s-OFDM is used for all (PUSCHs) of cell indices #0, #1, #2, and #3.

According to this embodiment, even when a DWS field in DCI format 0_X is 1 bit, waveforms for a plurality of cells can be appropriately indicated.

### <Embodiment B6>

When a 1-bit DWS field is configured for DCI format 0_X, whether a specific DCI field is present in this DCI format 0_X may be based on a rule. The rule may follow at least one of some options below.

- Option 1: The specific DCI field may be at least one of some options below.
   -- Option 1-1: DMRS sequence initialization
   -- Option 1-2: PTRS-DMRS association
- Option 2: The rule may be at least one of some options below.
   -- Option 2-1: The specific DCI field is always present.
   -- Option 2-2: The specific DCI field is not present at all.
   -- Option 2-3: The specific DCI field for co-scheduled cells is always present.
   -- Option 2-4: For cells included in co-scheduled cells and configured with DWS, the specific DCI field is always present.
   -- Option 2-5: Based on DWS bits for all co-scheduled cells, whether the specific DCI field is present is determined. For example, the specific DCI field for all the co-scheduled cells is present if DWS indicates CP-OFDM for all the co-scheduled cells, and, otherwise, the specific DCI field is not present.

According to this embodiment, when a DWS field in DCI format 0_X is 1 bit, whether a specific DCI field is present can be appropriately determined.

### <Embodiment B7>

When a 1-bit DWS field is configured for DCI format 0_X, a size (bit width) of a specific DCI field in this DCI format 0_X may be based on a rule. The rule may follow at least one of some options below.

- Option 1: The specific DCI field may be at least one of some options below.

-- Option 1-1: Antenna port
-- Option 1-2: TPMI (precoding information and number of layers)

In option 1-1/1-2, (size of) at least one of the first specific DCI field and the second specific DCI field may be considered/determined. For example, (sizes of) both a "precoding information and number of layers" field and a "second precoding information" field may be considered/determined.

- Option 2: The rule may follow at least one of some options below.

-- Option 2-1: Irrespective of RRC configuration for a transform precoder, the rule determines the size of the specific DCI field under the assumption that the transform precoder is disabled (or enabled).
-- Option 2-2: Irrespective of the content of DWS indication, the rule determines the size of the specific DCI field under the assumption that the transform precoder is disabled (or enabled).
-- Option 2-3: The rule determines the size of the specific DCI field, based on a transform precoder (transformPrecoder) RRC configured for a specific CC.
-- Option 2-4: The rule determines the size of the specific DCI field, based on a transform precoder (transformPrecoder) RRC configured for all co-scheduled cells. In this option, transformPrecoder may be common over a plurality of co-scheduled cells.
-- Option 2-5: The rule determines the size of the specific DCI field, based on the content of DWS indication.

According to this embodiment, when a DWS field in DCI format 0_X is 1 bit, a size of a specific DCI field can be appropriately determined.

### <Embodiment B8>

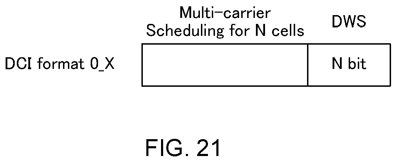

When an N-bit DWS field is configured for DCI format 0_X for scheduling N CCs (FIG. 21), interpretation of the N-bit indication may follow at least one of some embodiments below.

### - Embodiment 8-1

For a corresponding cell, '0' and '1' may indicate CP-OFDM (transform precoder is disabled) and DFT-s-OFDM (transform precoder is enabled), respectively. According to this interpretation, complex combinations of waveforms can be avoided over co-scheduled cells.

### - Embodiment 8-2

For a corresponding cell, '0' and '1' may indicate a waveform configured in an RRC parameter and waveform switching from the waveform configured in the RRC parameter, respectively. This case can be considered together with Embodiment B1. For example, in Embodiment 1-1, a transform precoder is restricted to be disabled, thereby enabling complex waveform indication to be avoided.

In Embodiment 8-1/8-2, the interpretations of '0' and '1' may be reversed.

The N bits for the DWS may follow options below.
- Option 1: A relationship between the N bits for the DWS and N co-scheduled cells may follow at least one of some options below.

-- Option 1-1: The least significant bit (LSB) corresponds to a CC with the lowest or highest index. For example, assuming, for N = 4, N bits {ABCD} in the DWS field, a CC with index 0, a CC with index 1, a CC with index 2, and a CC with index 3 correspond to bit D, bit C, bit B, and bit A, respectively.
-- Option 1-2: The relationship (mapping) is defined in a specification.
-- Option 1-3: The relationship (mapping) is configured by an RRC IE.
-- Option 1-4: The relationship (mapping) is indicated by DCI/MAC CE.
-- Option 1-5: A set of a plurality of relationships (mappings) is configured by an RRC IE, and one relationship in the set is indicated by DCI/MAC CE.

According to this embodiment, an N-bit DWS field in DCI format 0_X for scheduling N CCs can be appropriately interpreted.

### <Embodiment B9>

When an N-bit DWS field is configured for DCI format 0_X for scheduling N CCs, whether a specific DCI field is present in this DCI format 0_X may be based on a rule. The rule may follow at least one of some options below.

- Option 1: The specific DCI field may be at least one of some options below.
   -- Option 1-1: DMRS sequence initialization
   -- Option 1-2: PTRS-DMRS association
- Option 2: The rule may be at least one of some options below.
   -- Option 2-1: The specific DCI field is always present.
   -- Option 2-2: The specific DCI field is not present at all.
   -- Option 2-3: The specific DCI field for co-scheduled cells is always present.
   -- Option 2-4: For cells included in co-scheduled cells and configured with DWS, the specific DCI field is always present.
   -- Option 2-5: Based on DWS bits for all co-scheduled cells with indices, whether the specific DCI field is present is determined. For example, if DWS indicates CP-OFDM for a cell with index 0, among the co-scheduled cells, the specific DCI field (for example, DMRS sequence initialization field) for the cell is present, and, otherwise, the specific DCI field is not present.

According to this embodiment, when a DWS field in DCI format 0_X for scheduling N CCs is N bits, whether a specific DCI field is present can be appropriately determined.

### <Embodiment B10>

When an N-bit DWS field is configured for DCI format 0_X for scheduling N CCs, a size (bit width) of a specific DCI field in this DCI format 0_X may be based on a rule. The rule may follow at least one of some options below.

- Option 1: The specific DCI field may be at least one of some options below.

-- Option 1-1: Antenna port field
-- Option 1-2: TPMI (precoding information and number of layers)

In option 1-1/1-2, (size of) at least one of the first specific DCI field and the second specific DCI field may be considered/determined. For example, (sizes of) both a "precoding information and number of layers" field and a "second precoding information" field may be considered/determined.

- Option 2: The rule may follow at least one of some options below.

-- Option 2-1: Irrespective of RRC configuration for a transform precoder, the rule determines the size of the specific DCI field under the assumption that the transform precoder is disabled (or enabled).
-- Option 2-2: Irrespective of the content of DWS indication, the rule determines the size of the specific DCI field under the assumption that the transform precoder is disabled (or enabled).
-- Option 2-3: The rule determines the size of the specific DCI field, based on a transform precoder (transformPrecoder) RRC configured for a specific CC.
-- Option 2-4: The rule determines the size of the specific DCI field, based on a transform precoder (transformPrecoder) RRC configured for all co-scheduled cells. In this option, transformPrecoder may be common over a plurality of co-scheduled cells.
-- Option 2-5: The rule determines the size of the specific DCI field, based on the content of DWS indication.

According to this embodiment, when a DWS field in DCI format 0_X for scheduling N CCs is N bits, a size of a specific DCI field can be appropriately determined.

### <Type of Multi-Carrier Operation>

Types of multi-carrier operation include carrier aggregation (CA) and dual connectivity (DC).

The CA can be classified into some cases below.
- Case 1: Intra-band contiguous CA. It uses a plurality of continuous CCs in a single band. A single power amplifier (PA) is assumed for the plurality of CCs.
- Case 2: Intra-band non-contiguous CA. It uses a plurality of non-continuous CCs in a single band. A plurality of PAs are assumed for the plurality of CCs.
- Case 3: Inter-band CA It uses a plurality of CCs over a plurality of bands. A plurality of PAs are assumed for the plurality of CCs.

The DC is basically similar to case 3 of the CA, and uses a plurality of CCs over a plurality of bands. A plurality of PAs are assumed for the plurality of CCs.

### <Analysis C>

Using a plurality of different waveforms for a plurality of different CCs associated with a single PA is not really beneficial. This is because even when DFT-S-OFDM is used in only some of the plurality of CCs, PAPR characteristics considered in the PA are affected by the remaining CC(s) using CP-OFDM.

Using a plurality of different waveforms for a plurality of different CCs associated with a plurality of different PAs is similar to that for a single carrier. As long as the waveforms per PA are unified, the PAPR characteristics are similar to those of a single carrier using either DFT-S-OFDM or CP-OFDM.

It is studied that Rel. 18 supports DCI-based waveform switching (DWS) between DFT-S-OFDM and CP-OFDM. It is considered that a single waveform is used in all of a plurality of CCs associated with a single PA. Meanwhile, studies have not sufficiently been made on whether DWS is supported in the case of multi-carrier operation.

### <Embodiment C1>

This embodiment relates to a relationship between DWS and multi-carrier operation.

DCI-based waveform switching (DWS) may support specific multi-carrier operation. A UE may support DWS in the specific multi-carrier operation. With this, the advantage of DWS can be obtained in multi-carrier operation.

This embodiment may follow at least one of some options below.

### <<Option 1>>

The specific multi-carrier operation may be at least one of some options 1-x below.
- Option 1-1: Case 1 (Intra-band contiguous CA)
- Option 1-2: Case 2 (Intra-band non-contiguous CA)
- Option 1-3: Case 3 (Inter-band CA)
- Option 1-4: Multi-carrier operation is not supported in DWS

Option 1 may follow at least one of some examples below.

- Example 1-1: DWS supports only case 2 and case 3. DWS may not be supported in intra-band contiguous CA. The following may be defined: It is not expected that, when a plurality of bands supporting DWS are configured for intra-band contiguous CA, DWS is set in the plurality of bands (the UE does not expect that DWS is set in the plurality of bands).
- Example 1-2: DWS supports only case 3. DWS may not be supported in intra-band CA. The following may be defined: It is not expected that, when a plurality of bands supporting DWS are configured for intra-band CA, DWS is set in the plurality of bands (the UE does not expect that DWS is set in the plurality of bands).
- Example 1-3: DWS does not support operation using multi-carrier. The following may be defined: It is not expected that, when a plurality of CCs for PUSCH transmission are configured, DWS is set in the plurality of CCs (the UE does not expect that DWS is set in the plurality of CCs).

### <<Option 2>>

The restriction on DWS and multi-carrier operation (for example, the restriction of option 1) may be at least one of some options 2-x below.

- Option 2-1: The restriction is always applied. Restriction on multi-carrier operation in DWS may always be applied to a UE supporting DWS.
- Option 2-2: The restriction is based on a UE capability with finer granularity. The restriction may be based on RRC signaling corresponding to the UE capability. A UE capability for DWS per feature set per CC (feature set per component-carrier/cell, FSPC) may be defined.
- Option 2-3: The restriction depends on a UE capability with coarser granularity. The restriction may be based on RRC signaling corresponding to the UE capability. A plurality of UE capabilities for reporting capabilities for DWS may be defined/supported/reported. One of the plurality of UE capabilities may report support of DWS for each UE or for each band. Another one of the plurality of UE capabilities may report support of DWS in a multi-carrier case for each UE or for each band.

Option 2 may follow at least one of some examples below.

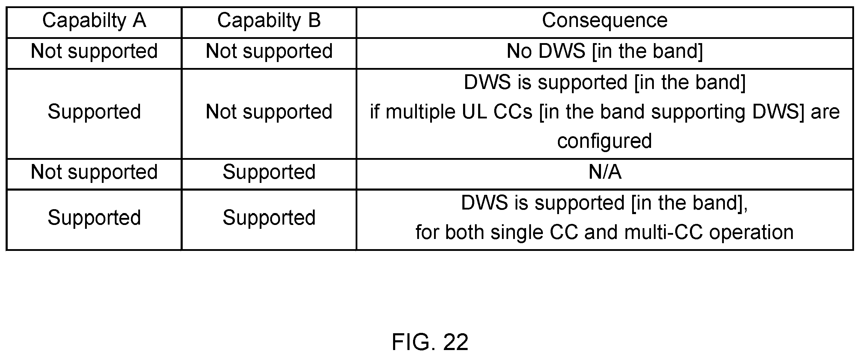

- Example 2-1: For each FSPC, a UE capability for reporting support of DWS is defined/reported. According to reporting of this UE capability, a NW/BS can identify which band or which case DWS is set/performed in.
- Example 2-2: For each UE, UE capability A for reporting support of DWS is defined/reported, and UE capability B for reporting support of DWS for a multi-carrier case is defined/reported. As shown in FIG. 22, at least one of some consequences below may depend on capability A and capability B.

-- When capability A is not supported, and capability B is not supported, No DWS (in the band) is supported.
-- In a case where capability A is supported and capability B is not supported, when a plurality of UL CCs (in the band supporting DWS) are configured, DWS (in the band) is supported.
-- When capability A is supported, and capability B is supported, DWS (in the band) is supported for both single CC operation and multi-CC operation.

According to this embodiment, a UE/BS can appropriately recognize whether DWS is supported/performed in multi-carrier operation.

### <Embodiment C2>

This embodiment relates to intra-band contiguous CA (case 1).

When intra-band contiguous CA is configured, a UE supporting DWS may support specific behavior for DWS indication in CCs associated with the intra-band contiguous CA. The plurality of CCs included in the intra-band contiguous CA may be contiguous and may be in the same band.

### <<Option 1>>

The specific behavior may be at least one of some options 1-x below.

- Option 1-1: The UE does not expect that different waveforms are simultaneously indicated/configured/determined in any two CCs belonging to intra-band contiguous CA (case 1).
- Option 1-2: When different waveforms are simultaneously indicated/configured/determined in a plurality of CCs belonging to case 1, the UE applies a waveform determined in a specific CC of the plurality of CCs. In this case, the UE may apply the waveform determined in the specific CC to all of the plurality of CCs or to only the specific CC. The specific CC may be at least one of some CCs below.

-- One CC in which a PUCCH can be transmitted.
-- One CC in which a PDCCH can be transmitted.

In option 1-2, the specific CC may be a CC having a higher/highest priority, among the plurality of CCs belonging to case 1. The priority for the plurality of CCs may be determined in accordance with at least one of some choices below.

- Choice 1: The priority is determined based on a plurality of (simultaneous) UL channels in the plurality of CCs. For example, a priority of a CC with a (dynamic grant, DG) PUSCH scheduled by DCI is higher than a priority of a PUSCH with a configured (configured grant, CG) PUSCH. For example, a priority of a CC configured with DWS and with a PUSCH scheduled by DCI is higher than a priority of a CC not configured with DWS and with a PUSCH scheduled by DCI. For example, a priority of a CC with a PUSCH scheduled by DCI indicating DWS is higher than a priority of a PUSCH with a PUSCH scheduled by DCI not indicating DWS.
- Choice 2: The priority is determined based on whether DWS is configured for the CC. For example, a priority of a CC configured with DWS is higher than a priority of a CC not configured with DWS.
- Choice 3: The priority is determined based on an index of the CC. For example, the smaller the CC index is, the higher the priority may be. For example, the larger the CC index is, the higher the priority may be.
- Choice 4: The priority is determined based on RRC configuration. For example, a priority may be configured for each of the plurality of CCs by an RRC IE. For example, a CC configured with the priority based on the RRC IE is prioritized over a CC not configured with the priority (has a higher priority).

According to this embodiment, a UE/BS can appropriately perform DWS in intra-band contiguous CA.

### <Embodiment C3>

This embodiment relates to a UE capability.

The UE capability may follow at least one of some options below.

### <<Option 1>>

UE capability signaling per UE or per band may report support of DWS in at least one of some cases below.
- A case of a single carrier.
- A case of multi-carrier.

### <<Option 2>>

UE capability signaling per UE or per band may report support of DWS in the following case.
- A case of multi-carrier (for example, intra-band contiguous CA) with PA sharing and with restriction that the same waveform is always applied over a plurality of CCs.

### <<Option 3>>

UE capability signaling may report support of DWS in the following case.
- A case of multi-carrier (for example, intra-band contiguous CA) with PA sharing and without any restriction.

A structure of the UE capability may follow at least one of some examples below.

- Example 1: Option 1/2 may be defined as a single basic feature for DWS (in Rel. 18). Option 3 may be defined as a feature separate from a basic feature for DWS (in Rel. 18) or as an advanced feature. The basic feature may be defined as a feature group (FG) to be a prerequisite for the advanced feature. Reporting granularity of the advanced feature may be finer than reporting granularity of the basic feature, for example, per FSPC.
- Example 2: Option 1 may be defined as a single basic feature for DWS (in Rel. 18). Option 2/3 may be defined as a feature separate from a basic feature for DWS (in Rel. 18) or as an advanced feature. The basic feature may be defined as a prerequisite feature group (FG) to be a prerequisite for the advanced feature. Reporting granularity of the advanced feature may be finer than reporting granularity of the basic feature, for example, per FSPC.

According to this embodiment, a UE/BS can report/recognize an appropriate UE capability related to DWS.

### <Variations of Embodiment C>

A UE may support an option depending on a UE capability, among options 1-1 to 1-4 of Embodiment C1. Different options among options 1-1 to 1-4 of Embodiment C1 may be supported by different UEs.

A UE may support an option depending on the case of option 1, among options 2-1 to 2-3 of Embodiment C1. For different options among options 1-1 to 1-4, different options among options 2-1 to 2-3 of Embodiment C1 may be supported.

In at least one of Embodiments C1 to C3, the CA type (one of cases 1 to 3) may be determined based on at least one of some pieces of information below.
- Signaling from a BS. It may be at least one of RRC configuration, MAC CE indication, and DCI indication.
- Reporting from a UE. It may be at least one of a capability and assistance information.
- Both of the two pieces of information above. For example, the CA type may be determined based on capability reporting from a UE for CA and configuration/indication from a BS for CA.

In place of the distinction between cases 1/2/3, at least one of signaling from the BS and reporting from the UE indicating whether a band/CC combination shares a single PA may be introduced. By replacing case 1 with a "case where a single PA is shared" and replacing case 2/3 with a "case where a PA per carrier/CC/band is implemented," at least one of Embodiments C1 to C3 may be applied.

### <Analysis D1>

UE capability signaling for DWS is under study.

The DWS is not easy to support multi-CC operation, especially not easy to support intra-band (contiguous) CA.

In order to allow a UE to select whether to support DWS in intra-band CA operation, it is conceivable that a UE capability for DWS is based on at least one of the following several definitions.
◆ Definition 1: The capability is defined as a capability per band. The UE may report whether to support the DWS for each band.
◆ Definition 2: In a band for which the UE reports supporting of DWS, at least one of several limitations on the number of CCs that can be configured to perform DWS in the band is imposed.

- ◆ Choice 1: One or less CC can be configured in the band for the UE to support/perform DWS.
- ◆ Choice 2: The UE reports the number of CCs supporting/performing DWS in the band.

In a case of imposing only the restriction of choice 1, the UE cannot support DWS in intra-band CA at all.

In a case of imposing only the restriction of choice 2, signaling of the report is required to consider the maximum number of CCs in the band, and causes a larger reporting overhead. In other words, the size (bit width, overhead) of the report of the number of CCs of the DWS in the band supported by the UE depends on the number of CCs (maximum number) in the band supported by the UE. For example, when the number of CCs in the band supported by the UE is 4, a candidate for the report of the number of CCs of the DWS in the band supported by the UE takes four values, and therefore the size of the report is 2 bits. Choice 2 is essentially equivalent to defining capability signaling per FSPC.

### <Embodiment D1>

This embodiment relates to analysis D1.

UE capability signaling may be defined for a UE to report supporting of DWS in operation using a plurality of CCs in one band. The UE capability may be defined separately from the UE capability for reporting the supporting of the DWS in another operation. The operation (first operation) using a plurality of CCs in one band may be intra-band CA, and may include at least one of intra-band contiguous CA (a case where a plurality of CCs are contiguous) and intra-band non-contiguous CA (a case where a plurality of CCs are not contiguous). Another operation (second operation) may be an operation other than the first operation, and may be an operation using a plurality of CCs over a plurality of bands. The operation using a plurality of CCs over a plurality of bands may be inter-band CA.

According to this embodiment, reporting overhead for supporting of DWS basic functions can be minimized. This embodiment enables the UE to support DWS in operation using a plurality of CCs in one band.

This embodiment may follow at least one of some options below.

◆ Option 1: One or more components in capability signaling may include at least one of the following several options 1-x.
   - ◆ Option 1-1: The number N of CCs in which a UE supports DWS in a band (the number N of CCs supported for DWS in a band). This component may correspond to choice 2 described above. The band may be a band in which capability signaling is reported. The value of N may depend on a scenario. Different values of N may be reported for different scenarios. The different scenarios may be an operation using contiguous CCs (for example, intra-band CA) or an operation using non-contiguous CCs (for example, intra-band CA).
   - ◆ Option 1-2: The number N1 of contiguous CCs in which a UE supports DWS in a band (the number N1 of contiguous CCs supported for DWS in a band).
   - ◆ Option 1-3: The number N2 of non-contiguous CCs in which a UE supports DWS in a band (the number N2 of non-contiguous CCs supported for DWS in a band).
◆ Option 2: A restriction related to one or more components may be in accordance with at least one of the following several options 2-x.
   - ◆ Option 2-1: N is greater than 1. Supporting of DWS in a case of N = 1 may be reported via another UE capability signaling. Such another UE capability signaling may indicate, for example, supporting of a basic function of the DWS.
   - ◆ Option 2-2: N1 is greater than 1.
   - ◆ Option 2-2a: N1 is greater than or equal to 1.
   - ◆ Option 2-3: N2 is greater than 1.
   - ◆ Option 2-4: Relationship between N1 and N2. The relationship may include any of N1 ≤ N2, N1 < N2, N1 ≥ N2, and N1 > N2

Separate/individual UE capability signaling may be considered/defined for intra-band contiguous CA and intra-band non-contiguous CA. This embodiment may be applied to at least one of intra-band contiguous CA and intra-band non-contiguous CA.

### <MPR Calculation in Multi-Carrier Operation>

The UE is allowed to reduce the maximum output power due to higher order modulation and a transmission bandwidth configuration.

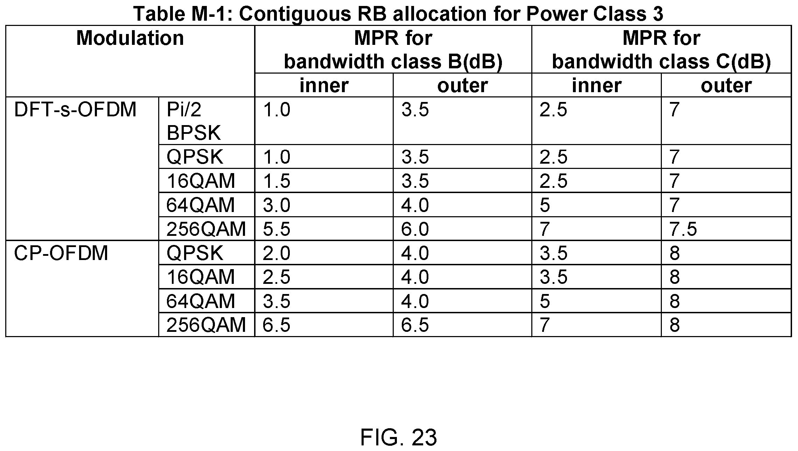

For various multi-carrier (multi-CC) operations, maximum power reduction (MPR) calculations are defined in specifications. A plurality of values of MPR specific to intra-band contiguous CA are defined. FIG. 23 illustrates an example (Table M-1) of the plurality of values of MPR for intra-band contiguous CA, power class 3, and contiguous RB mapping. In this table, each MPR value is associated with a combination of a waveform type (DFT-s-OFDM or CP-OFDM) and a modulation order (Pi/2 BPSK, QPSK, or the like).

When modulation formats or waveform types (DFT-s-OFDM or CP-OFDM) is different on different CCs, requirements are set by a rule applied to the waveform type and modulation order used in a configuration with the largest (worst) MPR.

The MPR for intra-band non-contiguous CA follows several cases below.
◆ Case 1: MPR in a case where UL transmissions over a plurality of CCs are not performed simultaneously is the same as MPR for single CC operation.
◆ Case 2: Otherwise, a plurality of values of MPR specific to this operation (intra-band non-contiguous CA) are defined. The plurality of values of MPR are completely different from the MPR for single CC operation.

MPR for inter-band CA is the same as the MPR for single CC operation.

In the present disclosure, a worst MPR value and a highest MPR value may be interchangeably interpreted.

### <Analysis D2>

As described above, for intra-band contiguous CA, the worst MPR value over the plurality of corresponding CCs is considered. For example, when DFT-s-OFDM is configured for CC #1 and CP-OFDM is configured for CC #1, the worst MPR (for example, MPR for CP-OPDM) over CC #1 and CC #2 is considered. When DFT-s-OFDM is indicated through DWS, unless DFT-s-OFDM is considered in determining MPR, the advantage of DFT-s-OFDM (smaller MPR) may not be achieved by a rule of worst MPR value over a plurality of CCs.

In intra-band non-contiguous CA, there is no such rule (MPR determination follows an MPR determination method for a single CC case or a method independent of waveform).

### <Embodiment D2>

This embodiment relates to analysis D2.

When the UE reports support of the DWS in an operation (multicarrier operation) using a plurality of CCs in one band, a specific restriction (condition) may be applied. A specific restriction (condition) may be applied to a UE that reports support of DWS in an operation using a plurality of CCs in one band. According to this embodiment, no overhead for a specific (meaningless) scenario occurs for UE capability signaling of DWS. The specific scenario may be a scenario in which the advantage of DWS (DFT-s-OFDM) is not achieved, or may be DWS in intra-band contiguous CA.

This embodiment may follow at least one of some options below.

◆ Option 1: A specific restriction may include at least one of the following several options 1-x.
   - ◆ Option 1-1: The CCs are non-contiguous.
   - ◆ Option 1-2: More than one CCs of a plurality of CCs simultaneously carry UL of non-zero bandwidth.
◆ Option 2: UE behavior when a specific restriction is not ensured (not satisfied) may follow at least one of the following several options 2-x.
   - ◆ Option 2-1: The UE ignores DWS configuration.
   - ◆ Option 2-2: The UE ignores DWS indication on DCI.
   - ◆ Option 2-3: The UE ignores indication information carried on the DCI with a transform precoder indicator (TPI) field (DWS field). The UE may ignore the TPI field and the indication information other than the TPI field. The indication information other than the TPI field may be, for example, PUSCH scheduling information. With this UE behavior, the UE may not transmit the PUSCH scheduled by the DCI.
   - ◆ Option 2-4: A specific restriction is always ensured (satisfied). A specification may define that "a UE does not expect that the PUSCH transmission is scheduled with a TPI field, without satisfying a specific condition (specific restriction)". To ensure the specific restriction, at least one of (1) a plurality of CCs to be used for UL transmission, (2) one or more slots to be used for UL transmission, and (3) contents of the TPI field may be limited.

When the specific restriction is ensured (satisfied), the UE may receive at least one of a DWS configuration (a configuration of the DWS being enabled) and a DWS indication (DCI including the DWS indication).

Option 1/2 of this embodiment may be applied to at least one of the following several objects.
◆ Object 1: all CCs in the multi-CC operation.
◆ Object 2: Scheduling CC. The CC may be a CC in which DCI with a DWS indication is transmitted (received).
◆ Object 3: Scheduled CC. The CC may be a CC in which a PUSCH is scheduled (transmitted) by DCI with a DWS indication.
◆ Object 4: All CCs in multi-CC operation for which DWS is configured.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may be one of the following conditions, or may be defined by AND/OR of two or more of the following conditions.
◆ The UE reports a specific UE capability (at least one function of the above-described embodiments).
◆ The UE is configured with at least one function of the above-described embodiments.

At least one of the above-described embodiments may be applied only to a UE that has reported a specific UE capability or that supports the specific UE capability.

The specific UE capability may indicate at least one of the following:
◆ supporting of specific processing/operation/control/information for at least one of the embodiments above.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
◆ Information indicating that the operation of the above-described embodiment is enabled/disabled.
◆ RRC parameters for a specific release (for example, Rel. 18/19). The RRC parameter may have a name obtained by adding "r18"/"r19" to the name of the existing RRC parameter.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including:
a transmitting section that transmits capability information related to supporting of dynamic transform precoder indication in operation using a plurality of component carriers in one band; and
a control section that controls reception of a configuration of the dynamic transform precoder indication.

### {Supplementary Note 2}

The terminal according to supplementary note 1, wherein the capability information includes at least one of a number of component carriers supporting the dynamic transform precoder indication, a number of contiguous component carriers supporting the dynamic transform precoder indication, and a number of non-contiguous component carriers supporting the dynamic transform precoder indication.

### {Supplementary Note 3}

The terminal according to supplementary note 1 or 2, wherein when at least one of a condition that the plurality of component carriers are non-contiguous and a condition that more than one component carriers of the plurality of component carriers simultaneously carry an uplink of a non-zero bandwidth is satisfied, at least one of the configuration and the dynamic transform precoder indication is received.

### {Supplementary Note 4}

The terminal according to any one of supplementary notes 1 to 3, wherein when at least one of a condition that the plurality of component carriers are non-contiguous and a condition that more than one component carriers of the plurality of component carriers simultaneously carry an uplink of a non-zero bandwidth is not satisfied, and the dynamic transform precoder indication is received, the control section ignores at least one of the configuration, the dynamic transform precoder indication, and downlink control information including the dynamic transform precoder indication.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

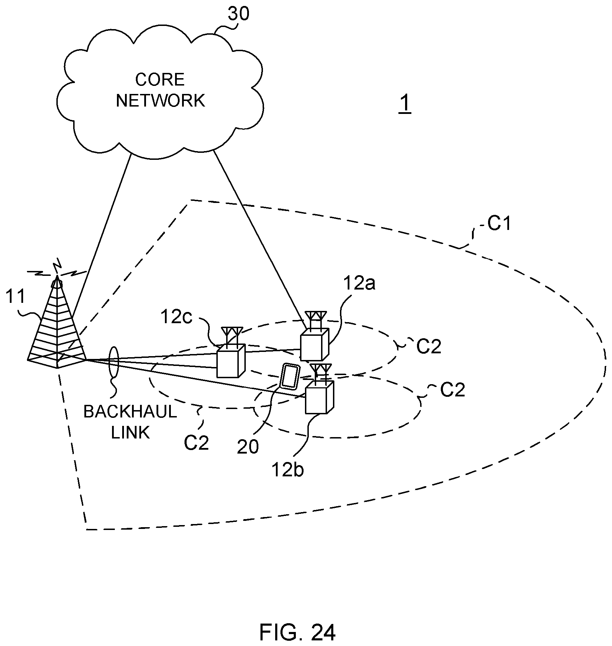

FIG. 24 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

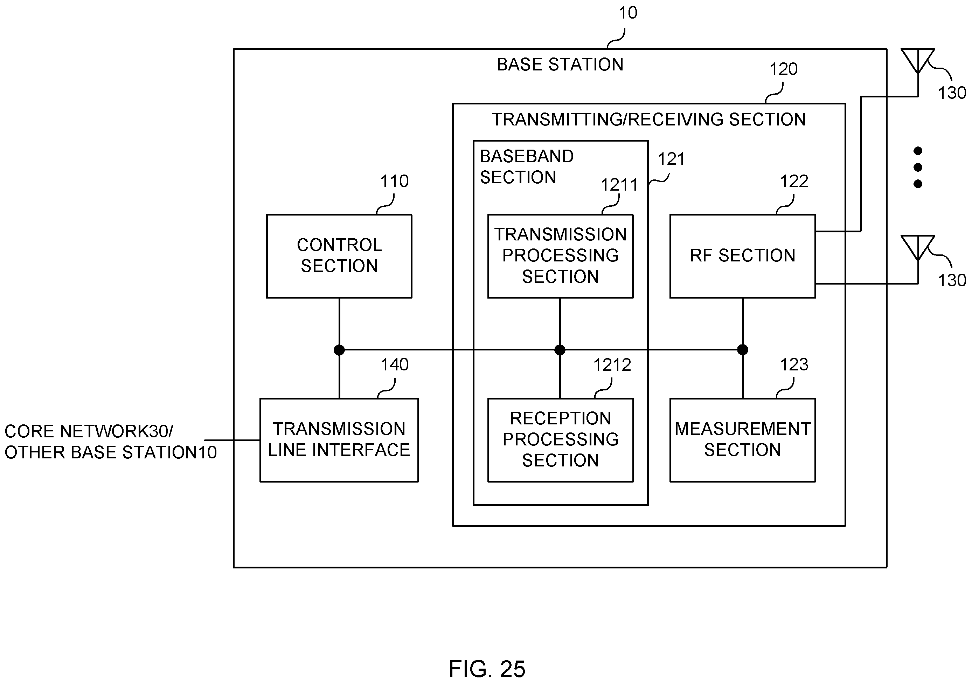

FIG. 25 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive capability information related to supporting of dynamic transform precoder indication in operation using a plurality of component carriers in one band. The control section 110 may control transmission of a configuration of the dynamic transform precoder indication.

### (User Terminal)

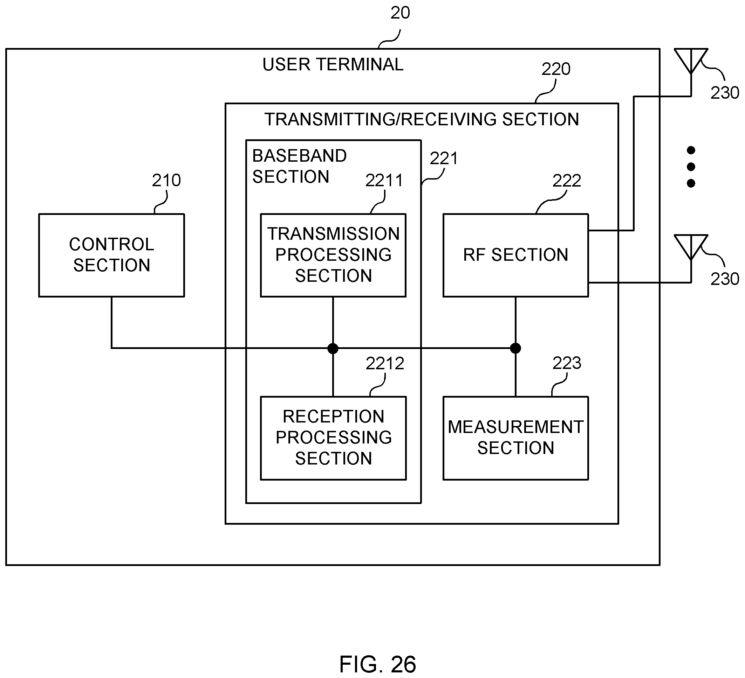

FIG. 26 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit capability information related to supporting of dynamic transform precoder indication in operation using a plurality of component carriers in one band. The control section 210 may control reception of a configuration of the dynamic transform precoder indication.

The capability information may include at least one of a number of component carriers supporting the dynamic transform precoder indication, a number of contiguous component carriers supporting the dynamic transform precoder indication, and a number of non-contiguous component carriers supporting the dynamic transform precoder indication.

When at least one of a condition that the plurality of component carriers are non-contiguous and a condition that more than one component carriers of the plurality of component carriers simultaneously carry an uplink of a non-zero bandwidth is satisfied, at least one of the configuration and the dynamic transform precoder indication may be received.

When at least one of a condition that the plurality of component carriers are non-contiguous and a condition that more than one component carriers of the plurality of component carriers simultaneously carry an uplink of a non-zero bandwidth is not satisfied, and the dynamic transform precoder indication is received, the control section may ignore at least one of the configuration, the dynamic transform precoder indication, and downlink control information including the dynamic transform precoder indication.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

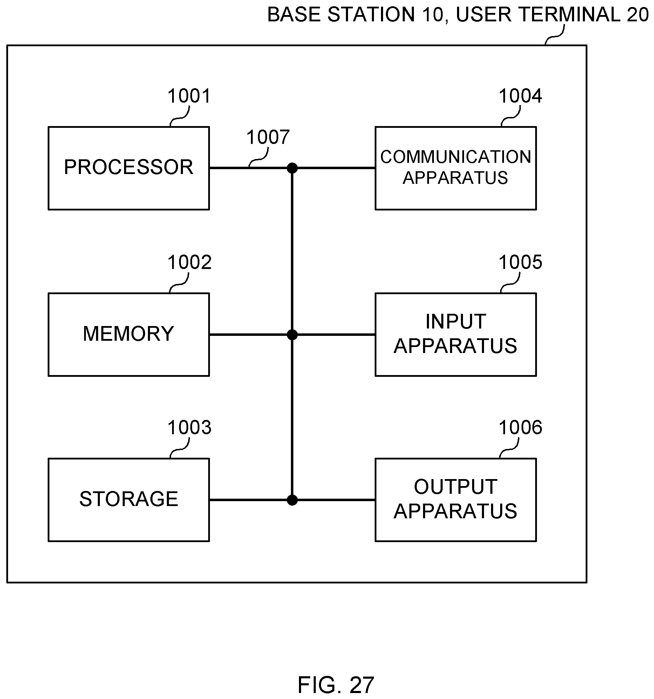

For example, a base station, a user terminal, and so on according to one embodiment of the present disclosure may function as a computer that executes the processes of the radio communication method of the present disclosure. FIG. 27 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

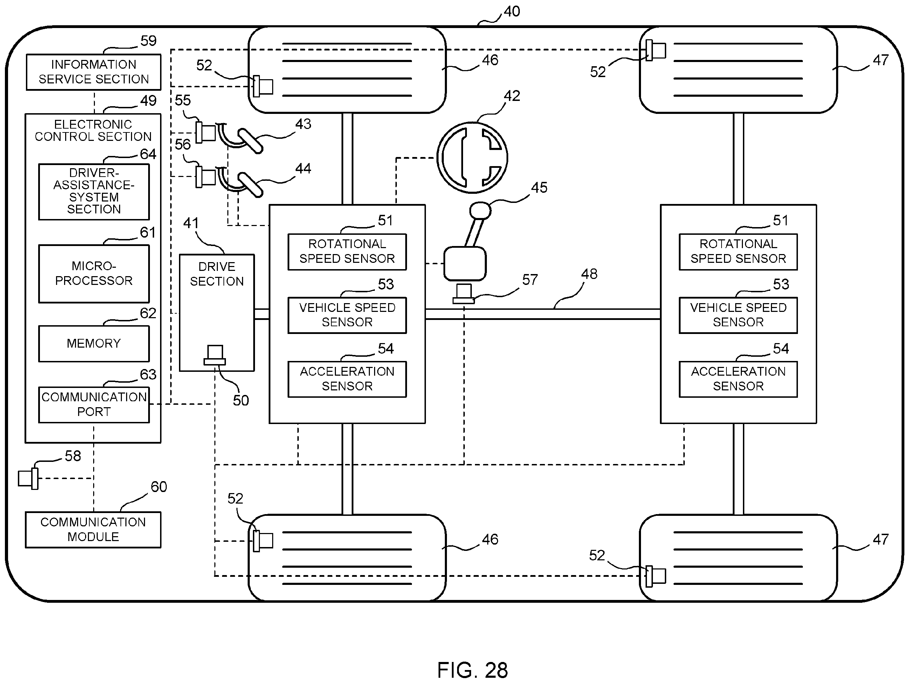

FIG. 28 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2023-192789, filed on November 13, 2023, the contents of which are incorporated herein by reference in their entirety.

## Claims

1. A terminal comprising:
a transmitting section that transmits capability information related to supporting of dynamic transform precoder indication in operation using a plurality of component carriers in one band; and
a control section that controls reception of a configuration of the dynamic transform precoder indication.

2. The terminal according to claim 1, wherein
the capability information includes at least one of a number of component carriers supporting the dynamic transform precoder indication, a number of contiguous component carriers supporting the dynamic transform precoder indication, and a number of non-contiguous component carriers supporting the dynamic transform precoder indication.

3. The terminal according to claim 1, wherein
when at least one of a condition that the plurality of component carriers are non-contiguous and a condition that more than one component carriers of the plurality of component carriers simultaneously carry an uplink of a non-zero bandwidth is satisfied, at least one of the configuration and the dynamic transform precoder indication is received.

4. The terminal according to claim 1, wherein
when at least one of a condition that the plurality of component carriers are non-contiguous and a condition that more than one component carriers of the plurality of component carriers simultaneously carry an uplink of a non-zero bandwidth is not satisfied, and the dynamic transform precoder indication is received, the control section ignores at least one of the configuration, the dynamic transform precoder indication, and downlink control information including the dynamic transform precoder indication.

5. A radio communication method for a terminal, the radio communication method comprising:
transmitting capability information related to supporting of dynamic transform precoder indication in operation using a plurality of component carriers in one band; and
controlling reception of a configuration of the dynamic transform precoder RADIO COMMUNICATION METHOD indication.

6. A base station comprising:
a receiving section that receives capability information related to supporting of dynamic transform precoder indication in operation using a plurality of component carriers in one band; and
a control section that controls transmission of a configuration of the dynamic transform precoder indication.
